# EUROPÄISCHE PATENTSCHRIFT

(11) **EP 0 848 028 B1**
(45) Veröffentlichungstag und Bekanntmachung des Hinweises auf die Patenterteilung: **18.02.2004**
(21) Anmeldenummer: 97120870.7
(22) Anmeldetag: 27.11.1997
(51) Int. Cl.: C08G 73/22, C08G 75/32

(54) **Herstellung von Polybenzoxazol- und Polybenzothiazol-Vorstufen**
Manufacture of precusors of polybenzoxazoles and polybenzothiazoles
Préparation de précurseurs de polybenzoxazoles et polybenzothiazoles

(30) Priorität: 11.12.1996 DE 19651539
(43) Veröffentlichungstag der Anmeldung: 17.06.1998
(73) Patentinhaber: Infineon Technologies AG, 81669 München (DE)
(72) Erfinder: Sezi, Recai, Dr., 91341 Röttenbach (DE); Kühn, Eberhard, 91334 Hemhofen (DE); Ahne, Hellmut, Dr., 91341 Röttenbach (DE); Kocman, Süleyman, Dipl.-Chem., 91301 Forchheim (DE)
(74) Vertreter: Kottmann, Heinz Dieter, Dipl.-Ing.

(56) Entgegenhaltungen:
- EP-A- 0 291 778
- DE-A- 2 647 004
- FR-A- 2 595 362

## Beschreibung

Die Erfindung betrifft ein Verfahren zur Herstellung von Polybenzoxazol-Vorstufen (Poly-o-hydroxyamide) und Polybenzothiazol-Vorstufen (Poly-o-mercaptoamide).

In der Mikroelektronik werden, insbesondere als Isolierschichten und Dielektrika, hochwärmebeständige Polymere benötigt. Vorstufen von derartigen Polymeren, wie Polyimide (PI) und Polybenzoxazole (PBO), können durch geeignete Zusätze photoreaktiv eingestellt und photochemisch direkt strukturiert werden. Die Vorstufen, die auch als Prepolymere bezeichnet werden, werden durch eine Temperaturbehandlung in das entsprechende Polymer (PI bzw. PBO) umgewandelt; dabei ergeben sich die endgültigen Eigenschaften.

Photosensitive PBO-Vorstufen bieten, im Gegensatz zu den meisten photosensitiven PI-Vorstufen, den Vorteil einer Strukturierbarkeit im positiven Modus und die Möglichkeit einer Entwicklung mit einem wäßrig-alkalischen Medium (siehe dazu EP-PS 0 023 662 und EP-OS 0 264 678). Ein wesentlicher Vorteil der positiven Strukturierbarkeit ist die geringere Defektdichte bei der Strukturierung der sogenannten "via holes", weil - im Vergleich zu negativ arbeitenden Systemen - nur ein Bruchteil der Fläche belichtet wird. Die für eine direkte Strukturierung geeigneten PBO-Vorstufen müssen außer einer angepaßten Alkalilöslichkeit, d.h. Löslichkeit in metallionenfreien wäßrig-alkalischen Entwicklern, auch eine gute Löslichkeit in organischen Lösemitteln aufweisen, damit sie aus einer Lösung - mittels Schleuder- oder Sprühtechniken - auf ein Substrat aufgebracht werden können.

Die gängigste Methode zur Herstellung von alkalilöslichen PBO-Vorstufen ist die Umsetzung eines Dicarbonsäurechlorids mit einem geeigneten Bis-o-aminophenol. Zum Abfangen des bei der Reaktion entstehenden Chlorwasserstoffs (HCl) wird in der Regel eine lösliche Base, wie Pyridin oder Triethylamin, zugesetzt (siehe EP-OS 0 264 678 und EP-PS 0 291 779). Das in der PBO-Vorstufe verbleibende restliche Chlorid sowie gegebenenfalls andere Ionen müssen mittels Ionenaustauscher entfernt werden, weil sie auf Dauer die Funktion der mikroelektronischen Bauteile beeinträchtigen können. Dies ist jedoch aufwendig und teuer.

Bei der Herstellung von PBO-Vorstufen muß auch die Forderung erfüllt werden, daß die Dicarbonsäure bzw. das Dicarbonsäurederivat vorwiegend mit den Aminogruppen des Bis-o-aminophenols reagiert (unter Amidbildung), aber nicht oder nur geringfügig mit dessen Hydroxylgruppen (unter Esterbildung), d.h. die Reaktionsselektivität der Amidbildung gegenüber der Esterbildung muß hoch sein. Ist die Reaktionsselektivität nicht ausreichend hoch, so führt die Reaktion zu unzureichend alkalilöslichen Polymeren oder zu einer Gelbildung, d.h. die PBO-Vorstufe ist dann unbrauchbar.

Es wurden auch bereits Verfahren zur chloridfreien Synthese von Polybenzoxazol-Vorstufen - und ebenso von Polybenzothiazol-Vorstufen - beschrieben. So ist es aus der EP-OS 0 158 726 bekannt, Dihydroxy- bzw. Dimercaptodiaminoverbindungen in Gegenwart eines Carbodiimids mit einer Dicarbonsäure umzusetzen. Bei dieser Reaktion bereiten jedoch Harnstoffreste, die aufgrund von Nebenreaktionen am Harz verbleiben, oft Probleme. Sie beeinträchtigen nämlich die thermische Beständigkeit des Polybenzoxazols bzw. Polybenzothiazols sowie die Qualität der daraus hergestellten Schichten. Außerdem sind die nach diesem Verfahren hergestellten Polymere in metallionenfreien wäßrig-alkalischen Entwicklern nicht ausreichend löslich.

Ein alternatives chloridfreies Herstellungsverfahren für Poly-o-hydroxyamide besteht darin, zur Umsetzung der Dicarbonsäure mit dem Bis-o-aminophenol Kondensationsreagenzien wie 1-Ethoxycarbonyl-2-ethoxy-1,2-dihydrochinolin oder Dicyclohexylcarbodiimid und 1-Hydroxy-1.2.3-benzotriazol einzusetzen (siehe: EP-OS 0 391 196). Die auf diese Weise hergestellten Polymere zeigen aber in metallionenfreien wäßrig-alkalischen Entwicklern ebenfalls nur eine unzureichende Löslichkeit.

Ein weiteres Verfahren zur Herstellung von Polybenzoxazolund Polybenzothiazol-Vorstufen auf chloridfreiem Weg wird in der EP-OS 0 761 718 vorgeschlagen. Hierbei werden Bis-oaminophenole bzw. Bis-o-aminothiophenole mit Dicarbonsäurederivaten in Form von (Thio)estern oder Amiden mit Verbindungen auf der Basis von Benzoxazol, Benzothiazol und Benzotriazol umgesetzt, d.h. mit sogenannten aktivierten Säurederivaten, wie aktivierten Estern. Die auf diese Weise hergestellten Polymere sind in metallionenfreien wäßrig-alkalischen Entwicklern löslich, allerdings müssen die verwendeten Dicarbonsäurederivate gesondert hergestellt bzw. isoliert werden (siehe dazu die EP-OS 0 761 641). Dies ist aber im Vergleich mit einer Direktsynthese, d.h. beispielsweise der Umsetzung einer Dicarbonsäure mit einem Bis-o-aminophenol, mit einem höheren Kostenaufwand verbunden.

Aus der DE-OS 37 16 629 sind wärmebeständige Positivresists auf der Basis von Polybenzoxazol-Vorstufen (in Form von Hydroxypolyamiden) und Diazochinonen bekannt. Zur Herstellung der PBO-Vorstufen werden - neben den eigentlichen Ausgangskomponenten - Triphenylphosphin und Hexachlorethan eingesetzt. Die Synthese ist somit nicht chloridfrei. Außerdem erfolgt die Entwicklung der Resists mit metallionenhaltigen Entwicklern.

Aufgabe der Erfindung ist es, ein selektives und kostengünstiges Verfahren anzugeben, mit dem - auf chloridfreiem direktem Weg - Polybenzoxazol- und Polybenzothiazol-Vorstufen hergestellt werden können, welche insbesondere in metallionenfreien wäßrig-alkalischen Entwicklern löslich sind.

Dies wird erfindungsgemäß dadurch erreicht, daß eine Dicarbonsäure oder ein Dicarbonsäureester mit einem Bis-o-aminophenol bzw. Bis-o-aminothiophenol in einem geeigneten Lösemittel in Gegenwart eines Aktivierungsreagenzes folgender Struktur umgesetzt wird: 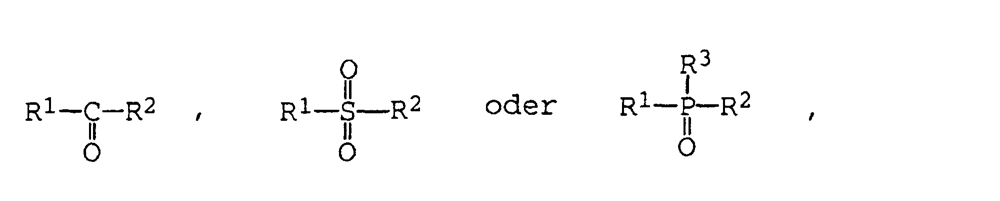 wobei folgendes gilt:
(1) mindestens eine der Gruppen R¹, R² und R³, die gleich oder verschieden sein können, weist eine der folgenden Strukturen auf:
   (a) eine aliphatische Struktur folgender Art:

      -X¹-(CX₂)-R

      mit
      - X =: H oder F
      - X¹ =: O oder S
      - R =: ein aliphatischer Rest (linear oder ver zweigt) und/oder cycloaliphatischer Rest mit bis zu 10 C-Atomen, wobei ≥ 50 % der H-Atome, mindestens 3 H-Atome, durch F-Atome ersetzt sein müssen,
      oder ein Rest der Struktur -(CX₂)ₘ-C₆X₅ mit m = 0 bis 5, wobei ≥ 50 % der X-Atome, mindestens 3 X-Atome, Fluor sind,
      und wobei bis zu 3 nicht-benachbarte C-Atome durch O, S, CO, COO, SO₂, NR' oder NR'-CO - mit R' = H, CH₃ oder CF₃ - ersetzt sein können und bis zu zwei aliphatische Bindungen ungesättigt sein können;
   (b) eine cyclische Struktur folgender Art:
      (A) 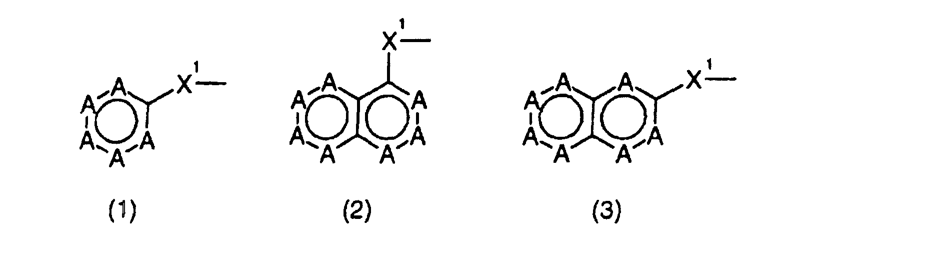
      (B) 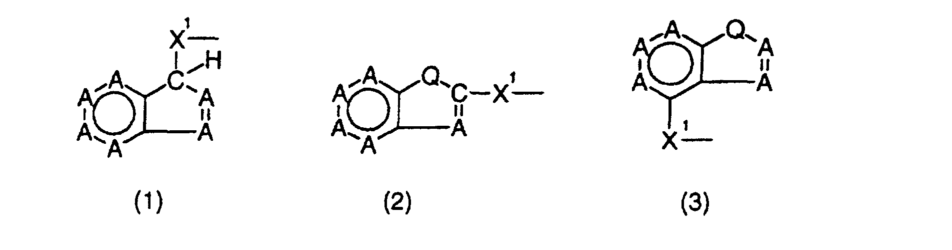 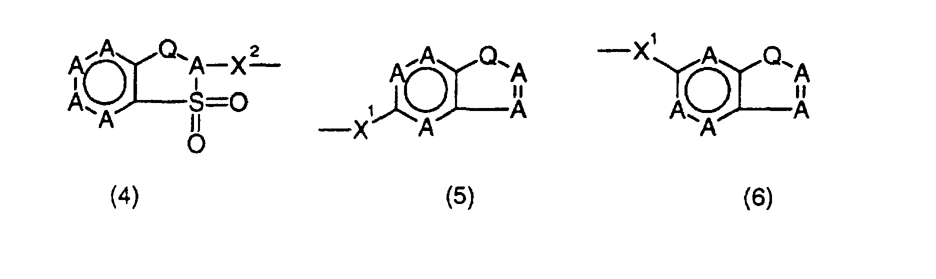 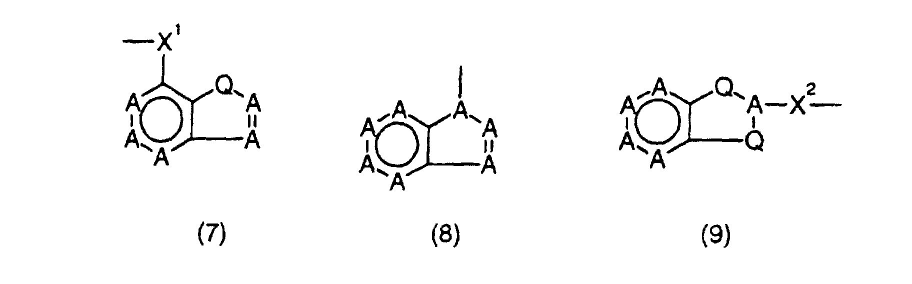 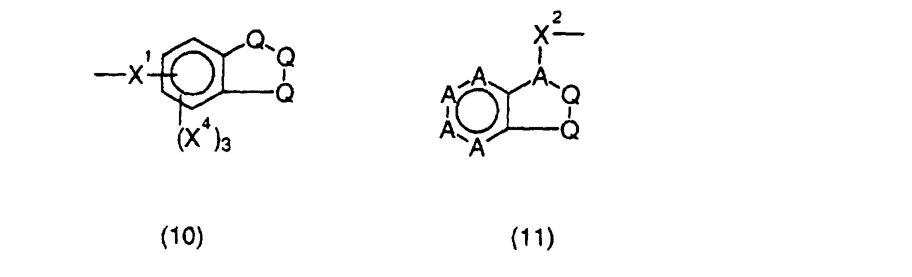
      (C) 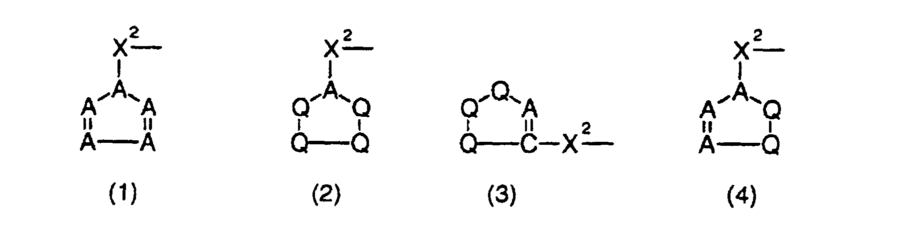 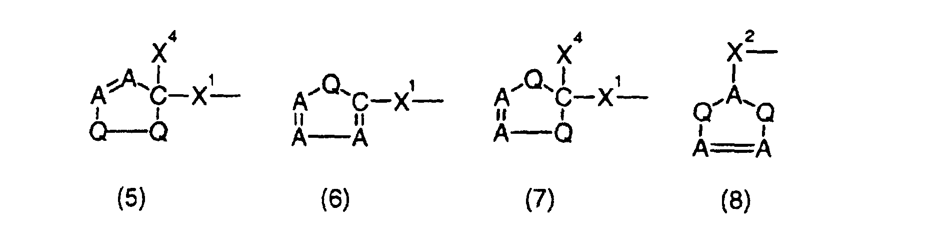 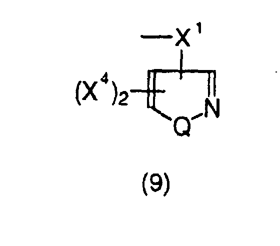
      (D) 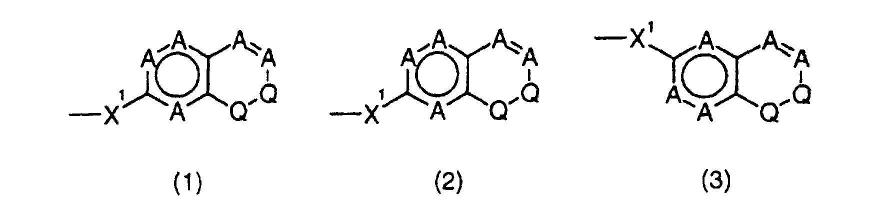 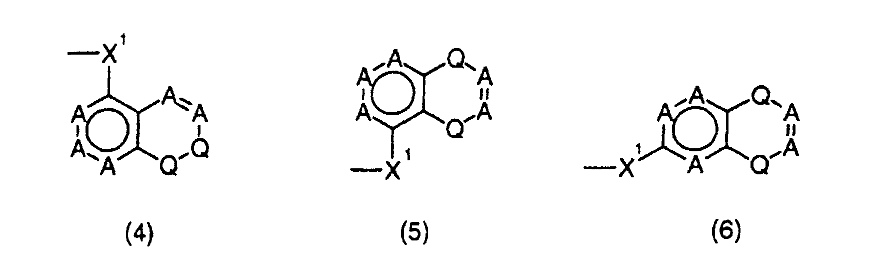 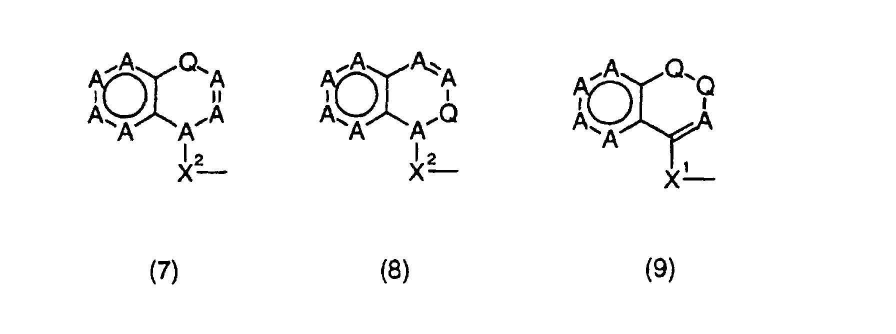 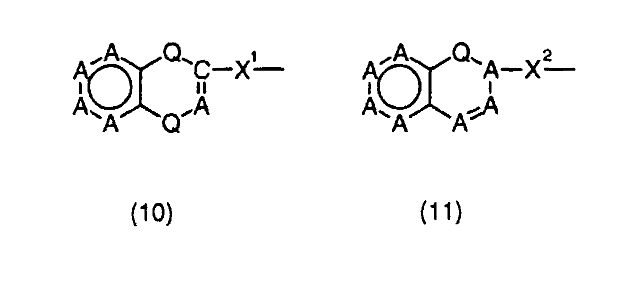
      (E) 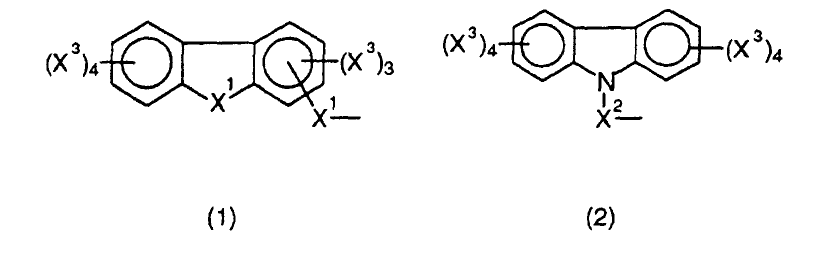
      (F) 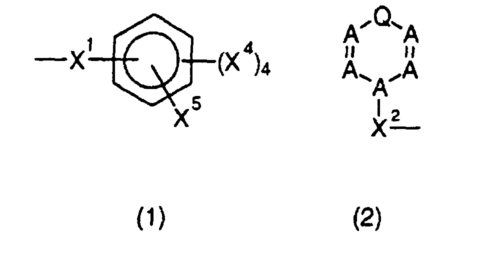 mit
         - A =: CX⁴ oder N
         - Q =: C(X⁴)₂, NX⁴, O, S oder CO,
         wobei bei zwei unmittelbar benachbarten Q-Atomen nicht beide O oder S oder eines O und das andere S bedeuten dürfen, und wobei mindestens ein N-Atom vorhanden sein muß, außer wenn bei unmittelbar benachbarten Q-Atomen eines O oder S und das andere CO bedeutet, und in einem aromatischen 6-Ring N-Atome nicht unmittelbar benachbart sein dürfen, und wobei die Strukturen (C) und (F2) maximal 4 Heteroatome enthalten,
         - X =: H oder F
         - X¹ =: O oder S
         - X² =: O, S oder eine direkte Bindung
         - X³ =: H, F, CN, NO₂, N(CH₃)₂, N(CF₃)₂, -(CX₂)ₘ-CX₃, -O-(CX₂)m-CX₃ oder -CO-(CX₂)ₘ-CX₃ mit m = 0 bis 5
         - X⁴ =: H, F, CN, NO₂, N(CH₃)₂, N(CF₃)₂ oder ein aliphatischer Rest (linear oder verzweigt) und/oder cycloaliphatischer Rest mit bis zu 10 C-Atomen, wobei die H-Atome teilweise oder vollständig durch F-Atome ersetzt sein können,
         oder ein Rest der Struktur -(CX₂)ₘ-C₆X₅ mit X = H oder F und m = 0 bis 5,
         wobei bis zu 3 nicht-benachbarte C-Atome durch O, S, CO, COO, SO₂, NR' oder NR'-CO - mit R' = H, CH₃ oder CF₃ - ersetzt sein können,
         - X⁵ =: F, CN, NO₂
         oder ein aliphatischer Rest (linear oder verzweigt) mit bis zu 5 C-Atomen,
         wobei ≥ 50 % der H-Atome, mindestens 3 H-Atome, durch F-Atome ersetzt sein müssen und eines der C-Atome durch O, S, CO, COO, SO₂, NR' oder NR'-CO - mit R' = H, CH₃ oder CF₃ - ersetzt sein kann;
      die restliche(n) der Gruppen R¹, R² und R³ ist/sind gegegebenenfalls
      ein aliphatischer Rest (linear oder verzweigt) und/oder cycloaliphatischer Rest mit bis zu 20 C-Atomen
      oder ein Rest auf Aryl- oder Heteroarylbasis mit bis zu 3 aromatischen 5- oder 6-Ringen, die entweder ein gemeinsames aromatisches System bilden oder durch direkte Bindungen und/oder über CH₂, CF₂, O, CO, COO, SO₂, NR' oder NR'-CO - mit R' = H, CH₃ oder CF₃ - miteinander verbunden sind und folgende Substituenten aufweisen können:
      CN, NO₂, OCX₃, COCX₃, COOCX₃ oder OCOCX₃,
      oder eine Kombination dieser beiden Reste mit bis zu 20 C-Atomen,
      wobei die aliphatischen Gruppierungen teilweise ungesättigt sein können und die H-Atome teilweise oder vollständig durch F-Atome ersetzt sein können;
(2) im Falle von 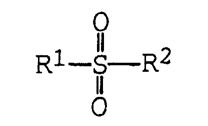 kann folgendes gelten:

   R¹ = O-

   und 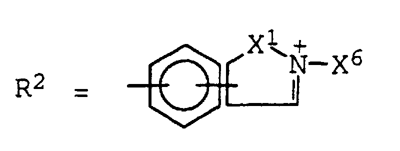 wobei X⁶ ein aliphatischer Rest (linear oder verzweigt) mit bis zu 6 C-Atomen oder ein Cyclopentyl- oder Cyclohexylrest ist.

Besonders geeignete Aktivierungsreagenzien sind solche der Struktur 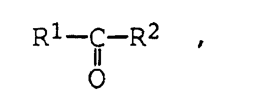 wobei R¹ und/oder R² einen stickstoffhaltigen Fünfring (mit 1 bis 4 N-Atomen) oder ein entsprechendes Derivat bedeuten. Derartige Aktivierungsreagenzien sind beispielsweise Carbonyldiimidazol und N,N'-Carbonyl-bis-(2-methylimidazol).

Allgemein können die Aktivierungsreagenzien - neben Strukturelementen der Art E und F1 - vorteilhaft insbesondere folgende Strukturelemente enthalten (in Klammern ist dabei jeweils die Zuordnung zu den Strukturen der verschiedenen Arten angegeben):

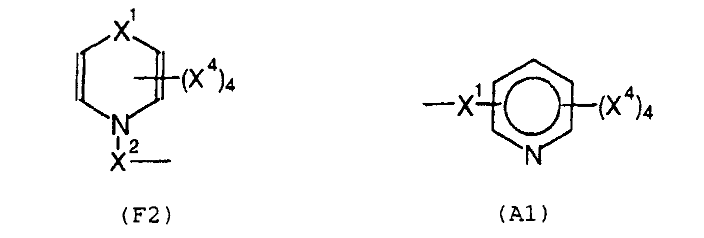

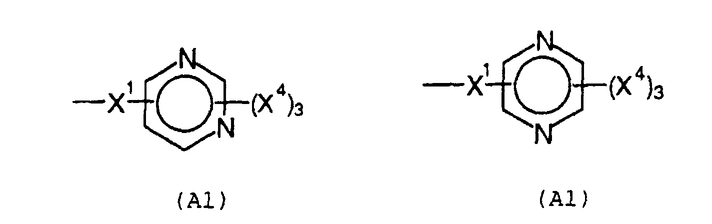

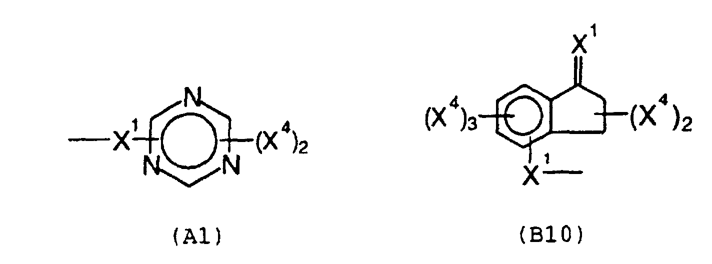

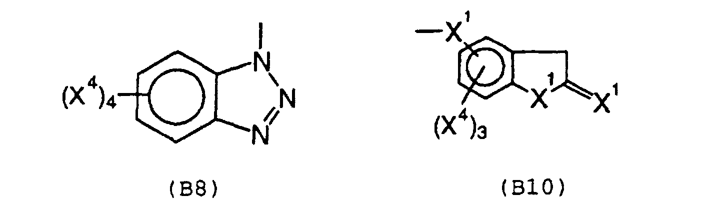

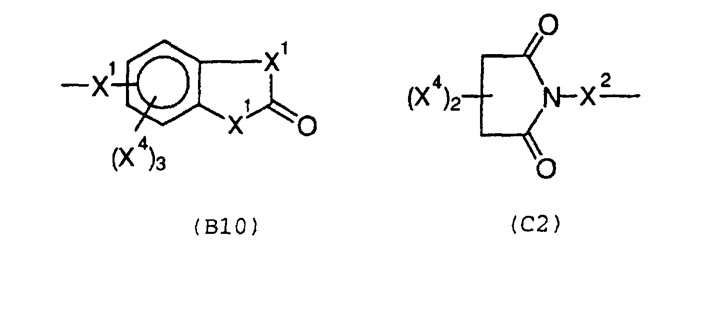

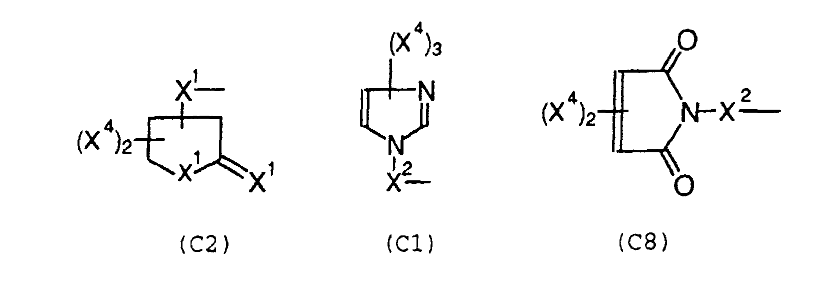

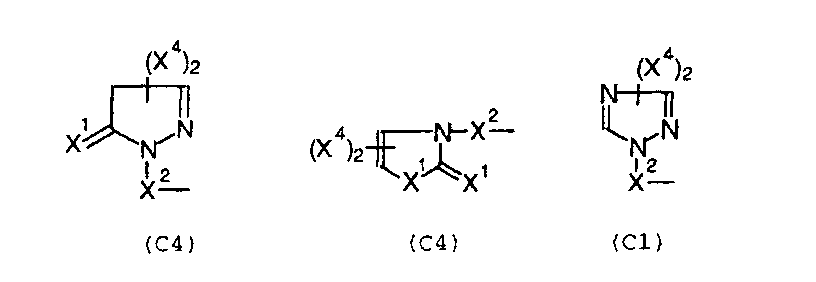

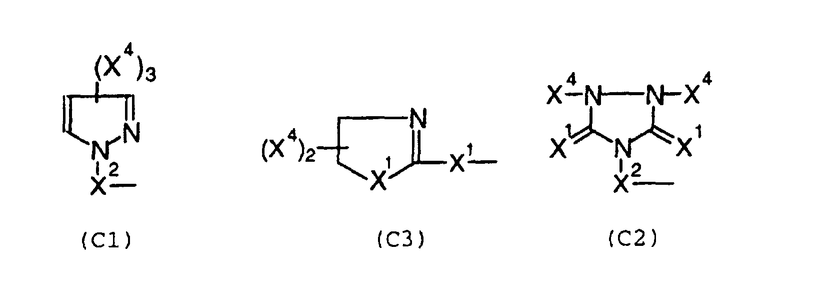

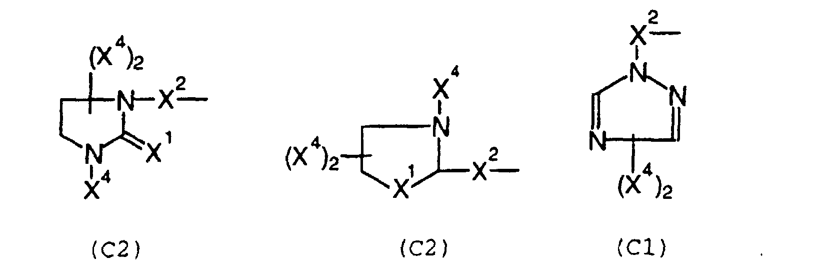

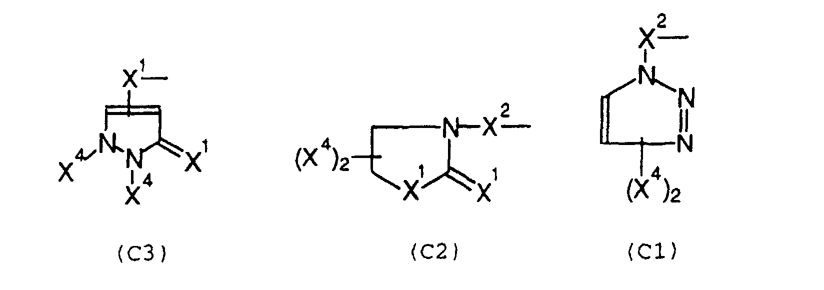

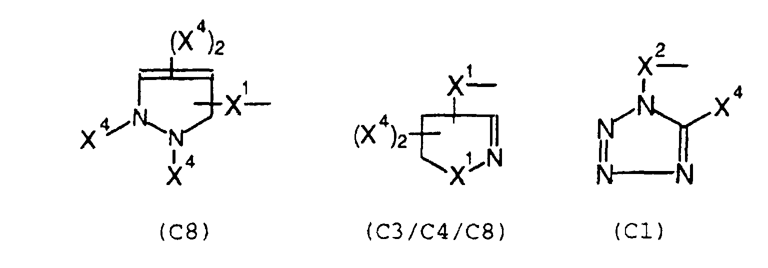

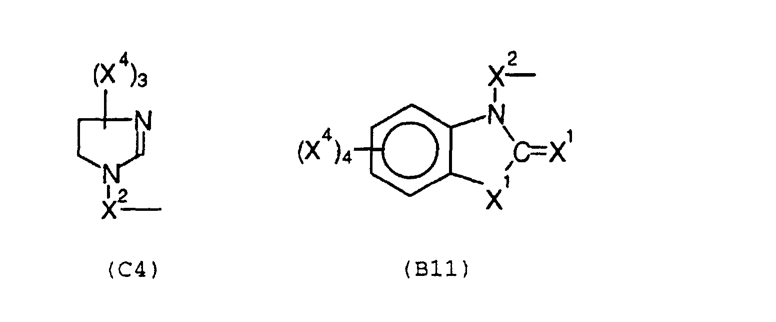

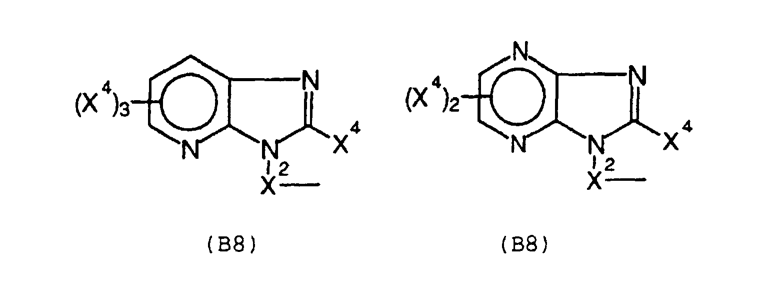

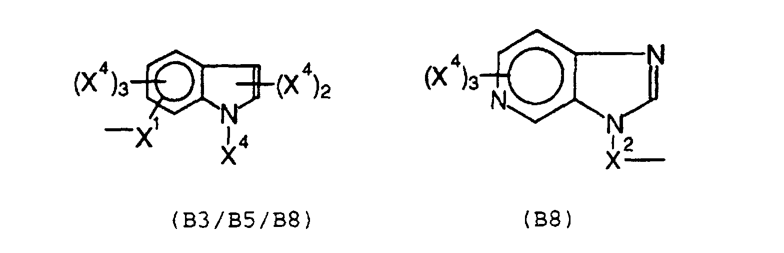

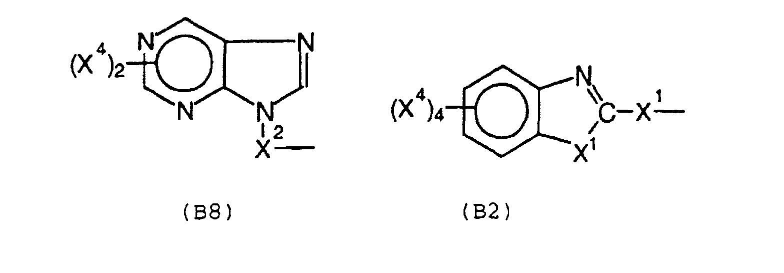

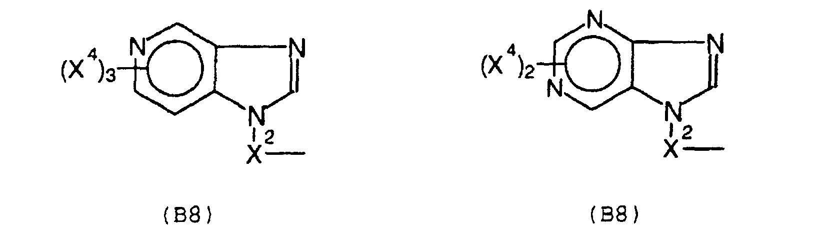

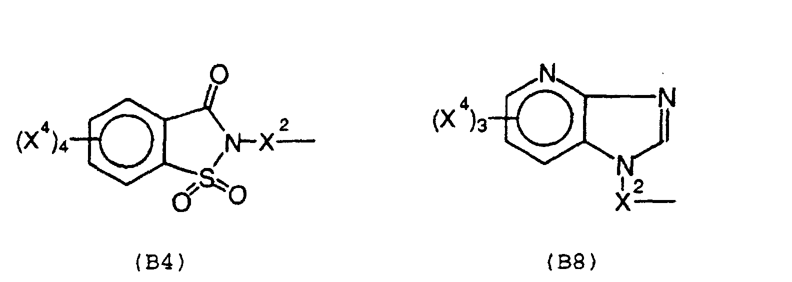

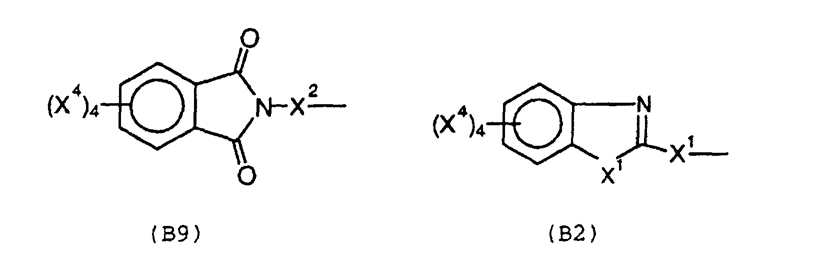

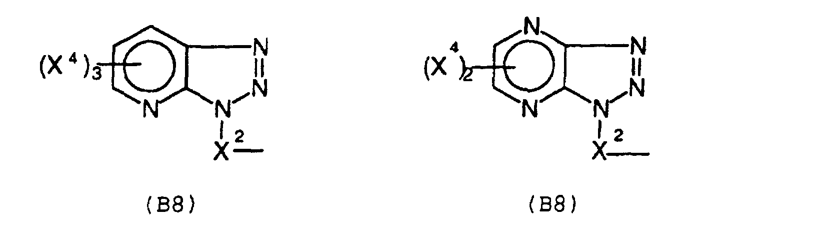

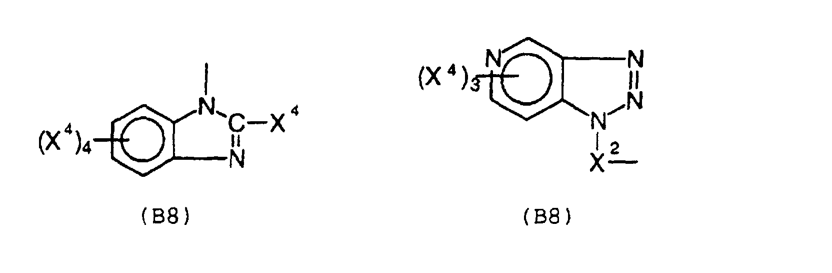

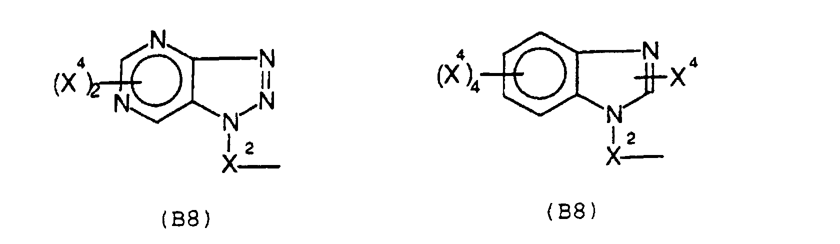

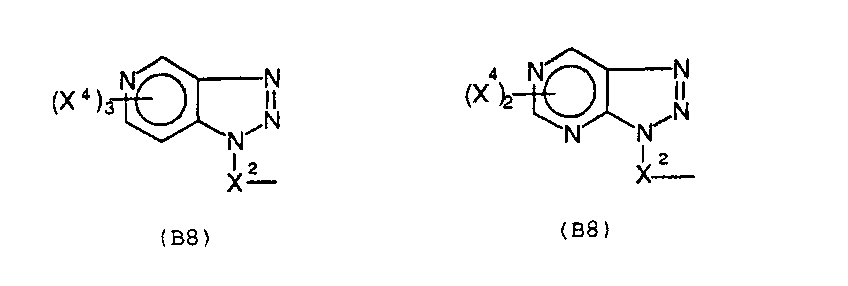

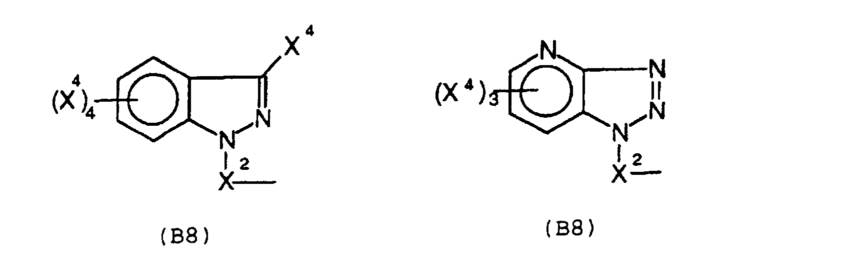

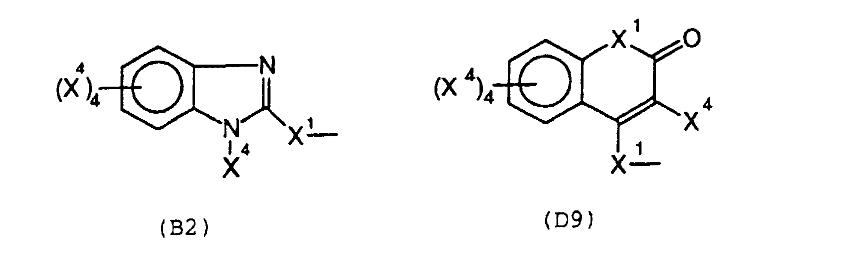

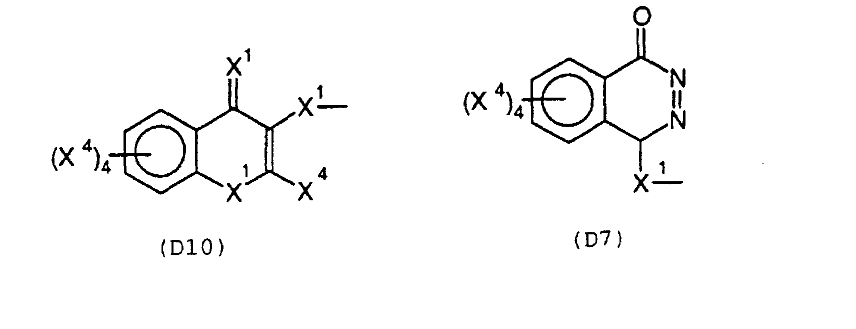

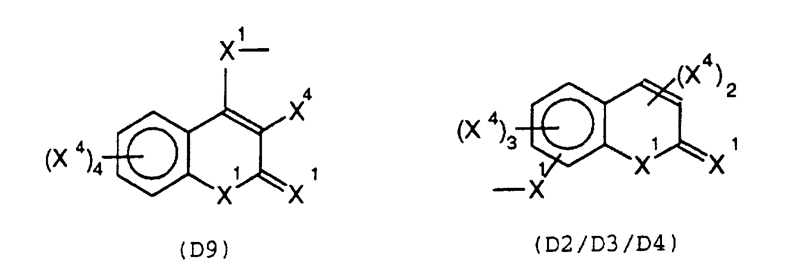

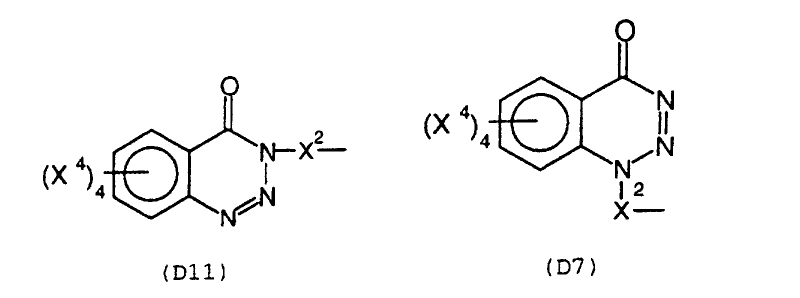

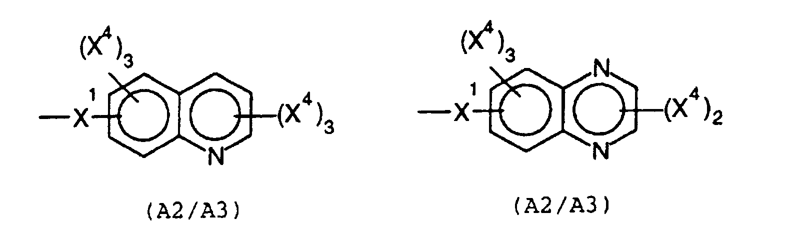

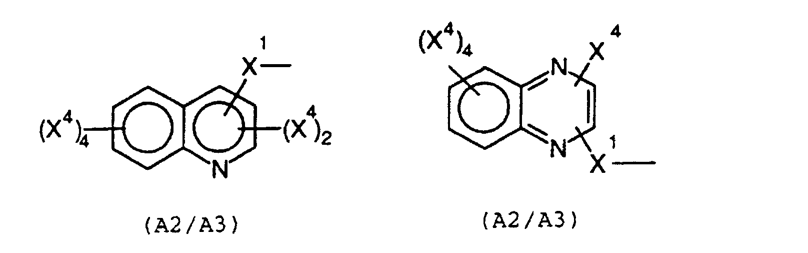

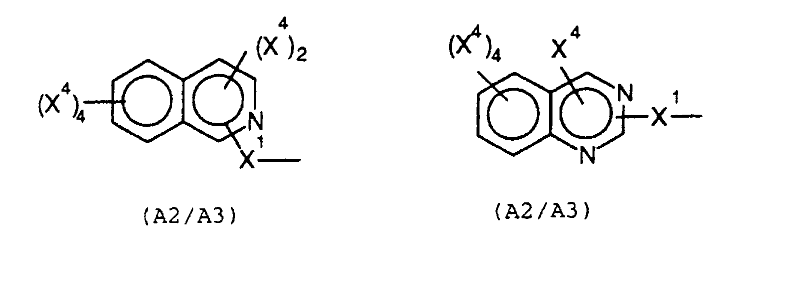

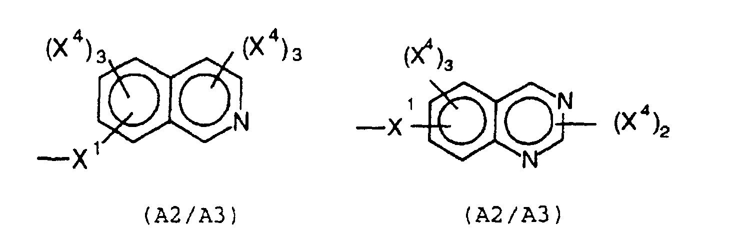

Ein Vorteil des Verfahrens nach der Erfindung besteht darin, daß die Dicarbonsäuren direkt eingesetzt werden können, d.h. aktivierte Carbonsäurederivate, wie Carbonsäurechloride oder aktivierte Ester, sind nicht erforderlich; übliche Dicarbonsäureester können aber durchaus verwendet werden. Das Verfahren zeigt außerdem eine ausreichende Selektivität der Amidbildung, d.h. die hergestellten Polymer-Vorstufen sind in metallionenfreien wäßrig-alkalischen Entwicklern, wie 3%ige wäßrige Tetramethylammoniumhydroxidlösung, gut löslich. Ferner verläuft die Herstellung der Polymer-Vorstufen ohne Gelbildung, und diese Vorstufen sind in organischen Lösemitteln gut löslich und verarbeitbar. Die Polymer-Vorstufen weisen neben guten Filmbildungseigenschaften auch eine ausgezeichnete Haftung auf verschiedenen Substraten, wie Siliciumoxid und -nitrid oder Keramik auf. Sie sind als Basispolymere für photosensitive, positiv arbeitende und wäßrig-alkalisch entwickelbare Formulierungen gut geeignet.

Beim Verfahren nach der Erfindung werden die Ausgangskomponenten im allgemeinen zügig in das Reaktionsmedium eingebracht, ein aufwendiges Zutropfen (einer Lösung) ist nicht notwendig; die Reihenfolge der Stoffzugabe kann dabei variiert werden. Das Aktivierungsreagenz wird, je nach dem erwünschten Umsatz bzw. Polymerisationsgrad, in stöchiometrischen oder nahezu stöchiometrischen Mengen eingesetzt. Zur Erhöhung der Reaktionsgeschwindigkeit bzw. der Ausbeute kann dem Reaktionsmedium, d.h. der Lösung, vorteilhaft eine organische Base in Form eines tertiären Amins zugesetzt werden, vorzugsweise Pyridin oder Triethylamin. Die Reaktionstemperatur beträgt vorzugsweise etwa 20 bis 150°C. Das Lösemittel ist vorzugsweise N-Methylpyrrolidon, Dimethylacetamid oder γ-Butyrolacton. Prinzipiell kann jedoch jedes Lösemittel verwendet werden, in dem die Ausgangskomponenten gut löslich sind. Auch Lösemittelgemische können eingesetzt werden.

Nach beendeter Reaktion kann die Reaktionslösung - zur Isolierung der Polymer-Vorstufe - mit einem geeigneten Fällungsmittel versetzt werden. Besonders geeignete Fällungsmittel sind Wasser und Mischungen von Wasser mit Alkoholen, wie Ethanol und Isopropanol. Das Fällungsmittel kann ferner eine Carbonsäure, wie Essigsäure, enthalten. Vor der Ausfällung können die Endgruppen der Polymer-Vorstufen mit einem geeigneten Verkappungsmittel blockiert werden.

Ein weiterer Vorteil des Verfahrens nach der Erfindung ist darin zu sehen, daß die Polymer-Vorstufen nicht isoliert werden müssen, d.h. die Reaktionslösung kann, gegebenenfalls in aufkonzentrierter Form, direkt weiterverarbeitet werden; die guten Filmbildungs- und Haftungseigenschaften werden dabei nicht beeinträchtigt. In Kombination mit photoaktiven Komponenten auf der Basis von Diazochinonen werden im allgemeinen solche Reaktionslösungen verwendet, welche keine starken Basen enthalten.

Anhand von Ausführungsbeispielen soll die Erfindung noch näher erläutert werden.

### Beispiel 1

### Herstellung einer PBO-Vorstufe

In einem trockenen Dreihalskolben mit Rückflußkühler werden unter Inertgas 2,58 g Diphenylether-4,4'-dicarbonsäure (10 mmol) vorgelegt und nach Zugabe von 10 ml trockenem N-Methylpyrrolidon unter Rühren gelöst. Anschließend werden 3,8 g N,N'-Carbonyl-bis-(2-methylimidazol) (20 mmol) als Aktivierungsreagenz zugegeben, und dann wird 2 h gerührt. Danach wird die Reaktionslösung mit 3,66 g 2,2-Bis-[(3,3'amino)-4,4'-hydroxyphenyl]-hexafluorpropan (10 mmol) versetzt und zuerst 24 h bei Raumtemperatur und nachfolgend 48 h bei 50°C gerührt.

### Beispiel 2

### Löslichkeit der PBO-Vorstufe in einem metallionenfreien alkalischen Entwickler und Filmbildung

Die Lösung nach Beispiel 1 wird in eine Plastikspritze gegeben, die mit einem 0,2 µm-Vorfilter versehen ist. Ein Teil der Polymerlösung wird mittels der Spritze auf eine gereinigte und getrocknete Siliziumscheibe (Wafer) aufgetragen, dann wird in einer Schleuderapparatur (Typ ST 146, Fa. Convac) geschleudert und auf einer Heizplatte bei 110°C getrocknet. Auf der Siliziumscheibe bildet sich dabei ein gleichmäßiger Polymerfilm. Nach dem Abkühlen wird die mit dem Polymerfilm beschichtete Scheibe in eine Glasschale eingetaucht, in der sich ein kommerziell erhältlicher metallionenfreier wäßrig-alkalischer Entwickler (NMD-W 2,38 %, Fa. Tokyo Ohka) befindet. Der Polymerfilm löst sich hierbei gleichmäßig auf, d.h. ohne Abplatzen oder Rißbildung. Bereits nach kurzer Zeit ist der Polymerfilm vollständig im Entwickler aufgelöst. Das gleiche Ergebnis wird erhalten, wenn an Stelle des kommerziellen Entwicklers eine 3 %ige Lösung von Tetramethylammoniumhydroxid in destilliertem Wasser verwendet wird.

Ein weiterer Teil der Polymerlösung wird auf eine Siliziumscheibe geschleudert, bei 110°C getrocknet und danach in einem Temperofen (Sirius Junior, Fa. LP Thermtech AG) unter Stickstoff bei 350°C getempert. Dabei entsteht ein gleichmäßiger hochtemperaturbeständiger PBO-Film.

### Beispiel 3

### Herstellung einer PBO-Vorstufe und Filmbildung

Entsprechend Beispiel 1 wird eine PBO-Vorstufe hergestellt und nach beendeter Reaktion das Lösemittel im Vakuum abdestilliert. Das verbleibende Polymer (PBO-Vorstufe) wird in Ethylacetat aufgenommen, dann wird viermal mit Wasser extrahiert und das Ethylacetat abdestilliert. Das verbleibende Polymer wird in 12 g Diethylenglykolmonoethylether gelöst und analog Beispiel 2 untersucht. Dabei werden die gleichen Ergebnisse erhalten.

### Beispiel 4

### Herstellung einer PBO-Vorstufe und Photostrukturierung

Entsprechend Beispiel 3 wird eine PBO-Vorstufe hergestellt. Nach dem Abdestillieren des Ethylacetats wird das verbleibende Polymer zusammen mit 1,2 g eines Diesters aus Naphthochinondiazid-5-sulfonsäure und Bisphenol A (als photoaktive Komponente) in 15 g N-Methylpyrrolidon gelöst. Diese Resistlösung wird dann entsprechend Beispiel 2 auf eine Siliziumscheibe aufgebracht und getrocknet. Anschließend wird mit einer Hg/Xe-Lampe durch eine Maske kontaktbelichtet, mit dem Entwickler NMD-W (im Verhältnis 1:1 mit Wasser verdünnt) entwickelt und bei 350°C getempert; die Filmdicke beträgt dann 1,5 µm. Dabei werden hochwärmebeständige Strukturen mit einer Auflösung bis zu 1 µm erhalten.

### Beispiel 5

### Herstellung einer PBO-Vorstufe

In einem trockenen Dreihalskolben mit Rückflußkühler werden unter Inertgas 6,15 g N,N'-Carbonyldiimidazol (38 mmol) als Aktivierungsreagenz und 3,0 g Isophthalsäure (18 mmol) vorgelegt; nach Zugabe von 50 ml trockenem N-Methylpyrrolidon wird 2 h bei 60°C gerührt. Danach werden 7,4 g 2,2-Bis-[(3,3'-amino)-4,4'-hydroxyphenyl]-hexafluorpropan (20 mmol) zugegeben, und dann wird 27 h bei 60°C gerührt. Anschließend werden 0,05 g Norbornen-endo-2,3-dicarbonsäureanhydrid (0,3 mmol) als Verkappungsmittel zugegeben, dann wird die Heizquelle (Ölbad) entfernt und 6 h gerührt. Nachfolgend wird die Reaktionslösung über ein Faltenfilter filtriert und in einem Gemisch aus Isopropanol und Wasser (Fällungsmittel) ausgefällt. Das ausgefallene Polymer wird über einen Büchnertrichter abgesaugt, zweimal mit Fällungsmittel gewaschen, in eine tarierte Glasschale überführt und zuerst bei 50°C/10 mbar, dann bei 50°C/10⁻² mbar getrocknet; die Ausbeute beträgt 8,7 g.

### Beispiel 6

### Herstellung einer PBO-Vorstufe

In einem trockenen Dreihalskolben mit Rückflußkühler werden unter Inertgas 5,2 g N,N'-Disuccinimidylcarbonat (20,4 mmol) als Aktivierungsreagenz und 2,5 g Diphenylether-4,4'-dicarbonsäure (9,7 mmol) vorgelegt; nach Zugabe von 42 ml trockenem N-Methylpyrrolidon wird zuerst 1 h bei Raumtemperatur und dann 5 h bei 70°C gerührt. Danach werden 3,95 g 2,2-Bis-[(3,3'-amino)-4,4'-hydroxyphenyl]-hexafluorpropan (10,8 mmol) zugegeben, und dann wird die Temperatur auf 90°C erhöht und 46 h gerührt. Anschließend wird die Heizquelle (Ölbad) entfernt, und beim Erreichen einer Temperatur von 60°C werden 0,026 g Norbornen-endo-2,3-dicarbonsäureanhydrid (0,16 mmol) als Verkappungsmittel zugegeben; dann wird 16 h gerührt. Nachfolgend wird die Reaktionslösung über ein Faltenfilter filtriert und in einem Gemisch aus Isopropanol und Wasser (Fällungsmittel) ausgefällt. Das ausgefallene Polymer wird über einen Büchnertrichter abgesaugt, zweimal mit Fällungsmittel gewaschen, in eine tarierte Glasschale überführt und zuerst bei 50°C/10 mbar, dann bei 50°C/10⁻² mbar getrocknet; die Ausbeute beträgt 5,2 g.

2 g des auf diese Weise hergestellten Polymers werden in 6 g γ-Butyrolacton gelöst und entsprechend Beispiel 2 untersucht. Dabei werden die gleichen Ergebnisse erhalten.

### Beispiel 7

### Herstellung einer PBO-Vorstufe

In einem trockenen Dreihalskolben mit Rückflußkühler werden unter Inertgas 5,3 g Bis-(4-nitrophenyl)-carbonat (17,4 mmol) als Aktivierungsreagenz und 2,1 g Diphenylether-4,4'-dicarbonsäure (8,1 mmol) vorgelegt; nach Zugabe von 40 ml trockenem N-Methylpyrrolidon wird 2 h bei 70°C gerührt. Danach werden 3,3 g 2,2-Bis-[(3,3'-amino)-4,4'-hydroxyphenyl]-hexafluorpropan (9 mmol) zugegeben, und dann wird die Temperatur auf 120°C erhöht und 40 h gerührt. Nach dem Abkühlen auf Raumtemperatur wird die Reaktionslösung über ein Faltenfilter filtriert und in einem Gemisch aus Isopropanol und Wasser (Fällungsmittel) ausgefällt. Das ausgefallene Polymer wird über einen Büchnertrichter abgesaugt, zweimal mit Fällungsmittel gewaschen, in eine tarierte Glasschale überführt und zuerst bei 50°C/10 mbar, dann bei 50°C/10⁻² mbar getrocknet; die Ausbeute beträgt 4,6 g.

### Beispiel 8

### Herstellung einer PBO-Vorstufe

In einem trockenen Dreihalskolben mit Rückflußkühler werden unter Inertgas 2,0 g Pyridin-2,6-dicarbonsäure (12 mmol), 4,4 g 2,2-Bis-[(3,3'-amino)-4,4'-hydroxyphenyl]-hexafluorpropan (12 mmol) und 2,55 g Triethylamin (25,2 mmol) vorgelegt; nach Zugabe von 20 ml trockenem N-Methylpyrrolidon wird 15 min bei Raumtemperatur gerührt. Danach werden 9,3 g (25,2 mmol) eines Aktivierungsreagenzes zugegeben, das durch Umsetzung von 4-Nitrobenzolsulfonsäurechlorid mit Pentafluorphenol (Molverhältnis 1:1) in trockenem Acetonitril unter Inertgas hergestellt wurde; dann wird 28 h bei 90°C gerührt. Nach dem Abkühlen wird die Reaktionslösung mit 20 ml N-Methylpyrrolidon versetzt, über ein Faltenfilter filtriert und in einem Gemisch aus Isopropanol und Wasser (Fällungsmittel) ausgefällt. Das ausgefallene Polymer wird über einen Büchnertrichter abgesaugt, zweimal mit Fällungsmittel gewaschen, in eine tarierte Glasschale überführt und zuerst bei 50°C/10 mbar, dann bei 50°C/10⁻² mbar getrocknet; die Ausbeute beträgt 5,3 g.

### Beispiel 9

### Herstellung einer PBO-Vorstufe

In einem trockenen Dreihalskolben mit Rückflußkühler werden unter Inertgas 2,3 g Isophthalsäure (14 mmol), 5,7 g 2,2-Bis-[(3,3'-amino)-4,4'-hydroxyphenyl]-hexafluorpropan (15,5 mmol) und 3,0 g Triethylamin (30 mmol) vorgelegt; nach Zugabe von 42 ml trockenem N-Methylpyrrolidon wird 15 min bei Raumtemperatur gerührt. Danach werden 12,6 g (29,5 mmol) eines Aktivierungsreagenzes zugegeben, das durch Umsetzung von Sulfurylchlorid mit o-Benzoesäure-sulfimid (Molverhältnis 1:2) in trockenem Acetonitril unter Inertgas hergestellt wurde; dann wird 48 h bei 70°C gerührt. Nach dem Abkühlen wird die Reaktionslösung über ein Faltenfilter filtriert und in einem Gemisch aus Isopropanol und Wasser (Fällungsmittel) ausgefällt. Das ausgefallene Polymer wird über einen Büchnertrichter abgesaugt, zweimal mit Fällungsmittel gewaschen, in eine tarierte Glasschale überführt und zuerst bei 50°C/10 mbar, dann bei 50°C/10⁻² mbar getrocknet; die Ausbeute beträgt 5,6 g.

### Beispiel 10

### Herstellung einer PBO-Vorstufe

In einem trockenen Dreihalskolben mit Rückflußkühler werden unter Inertgas 2,3 g Isophthalsäure (14 mmol), 5,7 g 2,2-Bis-[(3,3'-amino)-4,4'-hydroxyphenyl]-hexafluorpropan (15,5 mmol) und 3,0 g Triethylamin (30 mmol) vorgelegt; nach Zugabe von 60 ml trockenem N-Methylpyrrolidon wird 15 min bei Raumtemperatur gerührt. Danach werden 10,5 g (30 mmol) eines Aktivierungsreagenzes zugegeben, das durch Umsetzung von 4-Nitrobenzolsulfonsäurechlorid mit 2-Mercaptobenzothiazol (Molverhältnis 1:1) in trockenem Acetonitril unter Inertgas hergestellt wurde; dann wird 70 h bei 80°C gerührt. Nach dem Abkühlen wird die Reaktionslösung über ein Faltenfilter filtriert und in einem Gemisch aus Isopropanol und Wasser (Fällungsmittel) ausgefällt. Das ausgefallene Polymer wird über einen Büchnertrichter abgesaugt, zweimal mit Fällungsmittel gewaschen, in eine tarierte Glasschale überführt und zuerst bei 50°C/10 mbar, dann bei 50°C/10⁻² mbar getrocknet; die Ausbeute beträgt 4,2 g.

### Beispiel 11

### Herstellung einer PBO-Vorstufe

In einem trockenen Dreihalskolben mit Rückflußkühler werden unter Inertgas 3,1 g Diphenylether-4,4'-dicarbonsäure (12 mmol) und 2,7 g Triethylamin (27 mmol) in 16 ml trockenem N-Methylpyrrolidon bei Raumtemperatur gelöst. Danach werden 8,0 g (27 mmol) eines Aktivierungsreagenzes zugegeben, das durch Umsetzung von Sulfurylchlorid mit 2-Mercapto-5-methyl-1,3,4-thiadiazol (Molverhältnis 1:2) in trockenem Acetonitril unter Inertgas hergestellt wurde; dann wird 30 min gerührt. Anschließend werden 4,9 g 2,2-Bis-[(3,3'-amino)-4,4'-hydroxyphenyl]-hexafluorpropan (13 mmol) zugegeben, dann wird zunächst 1 h bei Raumtemperatur und danach 72 h bei 100°C gerührt; anschließend wird die Heizquelle (Ölbad) entfernt. Beim Erreichen einer Temperatur von 60°C werden 0,1 g Norbornen-endo-2,3-dicarbonsäureanhydrid (0,6 mmol) als Verkappungsmittel zugegeben, und dann wird 6 h gerührt. Die Reaktionslösung über ein Faltenfilter filtriert und in einem Gemisch aus Isopropanol und Wasser (Fällungsmittel) ausgefällt. Das ausgefallene Polymer wird über einen Büchnertrichter abgesaugt, zweimal mit Fällungsmittel gewaschen, in eine tarierte Glasschale überführt und zuerst bei 50°C/10 mbar, dann bei 50°C/10⁻² mbar getrocknet; die Ausbeute beträgt 4,8 g.

### Beispiel 12

### Herstellung einer PBO-Vorstufe

In einem trockenen Dreihalskolben mit Rückflußkühler werden unter Inertgas 3,6 g Diphenylether-4,4'-dicarbonsäure (14 mmol), 5,1 g 2,2-Bis-[(3,3'-amino)-4,4'-hydroxyphenyl]-hexafluorpropan (14 mmol), 3,0 g Triethylamin (30 mmol) und 8 ml trockenes N-Methylpyrrolidon vorgelegt, dann wird die Temperatur unter Rühren auf 60°C erhöht. Danach werden 12,3 g (29 mmol) eines Aktivierungsreagenzes, das durch Umsetzung von Phosphorsäure-mono-(4-nitrophenylester)-dichlorid mit 2-Mercapto-2-thiazolin (Molverhältnis 1:2) in trockenem Acetonitril unter Inertgas hergestellt wurde, sowie weitere 12 ml N-Methylpyrrolidon unter Rühren zugegeben; dann wird die Temperatur auf 90°C erhöht und 48 h gerührt. Nach dem Abkühlen auf Raumtemperatur wird die Reaktionslösung über ein Faltenfilter filtriert und in einem Gemisch aus Isopropanol, Essigsäure und Wasser (Fällungsmittel) ausgefällt. Das ausgefallene Polymer wird über einen Büchnertrichter abgesaugt, zweimal mit Fällungsmittel gewaschen, in eine tarierte Glasschale überführt und zuerst bei 50°C/10 mbar, dann bei 50°C/10⁻² mbar getrocknet; die Ausbeute beträgt 7,2 g.

### Beispiel 13

### Herstellung einer PBO-Vorstufe

In einem trockenen Dreihalskolben mit Rückflußkühler werden unter Inertgas 5,1 g Isophthalsäure (31 mmol), 6,5 g Triethylamin (65 mmol) und 26 g (65 mmol) eines Aktivierungsreagenzes, das durch Umsetzung von Phosphoroxychlorid mit 2-Mercapto-2-thiazolin (Molverhältnis 1:3) in trockenem Acetonitril unter Inertgas hergestellt wurde, vorgelegt. Nachfolgend werden bei Raumtemperatur 108 ml trockenes N-Methylpyrrolidon zugegeben, dann wird die Temperatur unter Rühren auf 60°C erhöht. Nach 30 min werden 12,5 g 2,2-Bis-[(3,3'-amino)-4,4'-hydroxyphenyl]-hexafluorpropan (34 mmol) unter Rühren zugegeben, dann wird 24 h bei 60°C gerührt. Anschließend werden 0,08 g Norbornen-endo-2,3-dicarbonsäureanhydrid (0,5 mmol) als Verkappungsmittel zugegeben, dann wird die Heizquelle (Ölbad) entfernt und 6 h gerührt. Die Reaktionslösung wird mit 20 ml N-Methylpyrrolidon versetzt, über ein Faltenfilter filtriert und in einem Gemisch aus Isopropanol und Wasser (Fällungsmittel) ausgefällt. Das ausgefallene Polymer wird über einen Büchnertrichter abgesaugt, zweimal mit Fällungsmittel gewaschen, in eine tarierte Glasschale überführt und zuerst bei 50°C/10 mbar, dann bei 50°C/10⁻² mbar getrocknet; die Ausbeute beträgt 16 g.

### Beispiel 14

### Herstellung einer PBO-Vorstufe

In einem trockenen Dreihalskolben mit Rückflußkühler werden unter Inertgas 4,0 g Isophthalsäure (24 mmol), 5,1 g Triethylamin (51 mmol) und 9,1 g 2,2-Bis-[(3,3'-amino)-4,4'hydroxyphenyl]-hexafluorpropan (25 mmol) vorgelegt. Hierzu werden bei Raumtemperatur 192 ml trockenes N-Methylpyrrolidon gegeben, und dann wird gerührt. Nach 30 min werden unter Rühren 17,7 g (51 mmol) eines Aktivierungsreagenzes zugegeben, das durch Umsetzung von Phosphorsäurediphenylester-chlorid mit 2-Mercapto-2-thiazolin (Molverhältnis 1:1) in trockenem Acetonitril unter Inertgas hergestellt wurde; dann wird die Temperatur auf 90°C erhöht und 42 h bei 90°C gerührt. Nach dem Abkühlen auf Raumtemperatur wird die Reaktionslösung über ein Faltenfilter filtriert und in einem Gemisch aus Isopropanol und Wasser (Fällungsmittel) ausgefällt. Das ausgefallene Polymer wird über einen Büchnertrichter abgesaugt, zweimal mit Fällungsmittel gewaschen, in eine tarierte Glasschale überführt und zuerst bei 50°C/10 mbar, dann bei 50°C/10⁻² mbar getrocknet; die Ausbeute beträgt 12 g.

### Beispiel 15

### Herstellung einer PBO-Vorstufe

In einem trockenen Dreihalskolben werden unter Inertgas 2,7 g Diphenylether-4,4'-dicarbonsäure (10,5 mmol), 2,1 g Triethylamin (21 mmol) und 5,25 g N-Ethyl-5-phenylisoxazolium-3'-sulfonat (21 mmol) als Aktivierungsreagenz vorgelegt; nach Zugabe von 30 ml trockenem Acetonitril wird 2 h bei Raumtemperatur gerührt. Danach werden 3,8 g 2,2-Bis-[(3,3'-amino)-4,4'-hydroxyphenyl]-hexafluorpropan (10,4 mmol) zugegeben, und dann wird 96 h bei Raumtemperatur gerüht. Nachfolgend werden zur Reaktionslösung unter Rühren 180 ml destilliertes Wasser gegeben, dann wird das ausgefallene Polymer über einen Büchnertrichter abgesaugt, zweimal mit destilliertem Wasser gewaschen, in eine tarierte Glasschale überführt und zuerst bei 50°C/10 mbar, dann bei 50°C/10⁻² mbar getrocknet; die Ausbeute beträgt 5,4 g.

### Beispiel 16

### Herstellung einer PBO-Vorstufe

In einem trockenen Dreihalskolben mit Rückflußkühler werden unter Inertgas 2,95 g Diphenylether-4,4'-dicarbonsäure (11,4 mmol), 4,6 g 2,2-Bis-[(3,3'-amino)-4,4'-hydroxyphenyl]-hexafluorpropan (12,6 mmol) und 2,4 g Triethylamin (24 mmol) vorgelegt; nach Zugabe von 31 ml trockenem N-Methylpyrrolidon wird 30 min bei Raumtemperatur gerührt. Danach werden 8,26 g (24 mmol) eines Aktivierungsreagenzes zugegeben, das durch Umsetzung von Phosphoroxychlorid mit 2,2,2-Trifluorethanol (Molverhältnis 1:3) in trockenem Acetonitril unter Inertgas hergestellt wurde; dann wird die Temperatur auf 100°C erhöht und 72 h gerührt. Anschließend wird die Heizquelle (Ölbad) entfernt, und beim Erreichen einer Temperatur von 60°C werden 0,03 g Norbornen-endo-2,3-dicarbonsäureanhydrid (0,18 mmol) als Verkappungsmittel zugegeben; dann wird 6 h gerührt. Nach dem Abkühlen auf Raumtemperatur wird die Reaktionslösung über ein Faltenfilter filtriert und in einem Gemisch aus Isopropanol und Wasser (Fällungsmittel) ausgefällt. Das ausgefallene Polymer wird über einen Büchnertrichter ab-gesaugt, zweimal mit Fällungsmittel gewaschen, in eine tarierte Glasschale überführt und zuerst bei 50°C/10 mbar, dann bei 50°C/10⁻² mbar getrocknet; die Ausbeute beträgt 6,5 g.

## Patentansprüche

1. Verfahren zur Herstellung von Polybenzoxazol- und Polybenzothiazol-Vorstufen, **dadurch gekennzeichnet, daß** eine Dicarbonsäure oder ein Dicarbonsäureester mit einem Bis-o-aminophenol bzw. Bis-o-aminothiophenol in einem geeigneten Lösemittel in Gegenwart eines Aktivierungsreagenzes folgender Struktur umgesetzt wird: 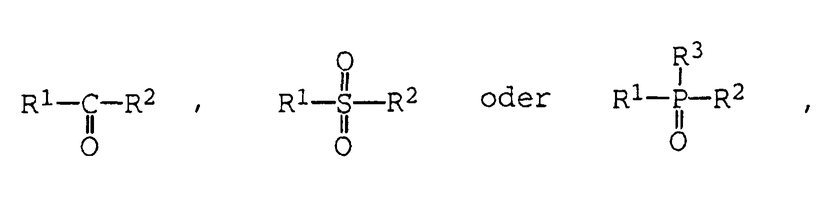 wobei folgendes gilt:
(1) mindestens eine der Gruppen R¹, R² und R³, die gleich oder verschieden sein können, weist eine der folgenden Strukturen auf:
(a) eine aliphatische Struktur folgender Art:
-X¹-(CX₂)-R
mit
X = H oder F
X¹ = O oder S
R = ein aliphatischer und/oder cycloaliphatischer Rest mit bis zu 10 C-Atomen, wobei ≥ 50 % der H-Atome, mindestens 3 H-Atome, durch F-Atome ersetzt sein müssen,
oder ein Rest der Struktur -(CX₂)ₘ-C₆X₅ mit m = 0 bis 5, wobei ≥ 50 % der X-Atome, mindestens 3 X-Atome, Fluor sind,
und wobei bis zu 3 nicht-benachbarte C-Atome durch O, S, CO, COO, SO₂, NR' oder NR'-CO - mit R' = H, CH₃ oder CF₃ - ersetzt sein können und bis zu zwei aliphatische Bindungen ungesättigt sein können;
(b) eine cyclische Struktur folgender Art:
(A) 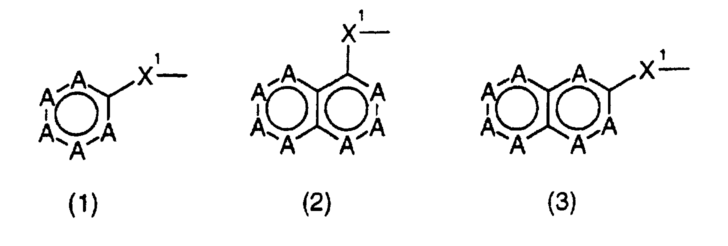
(B) 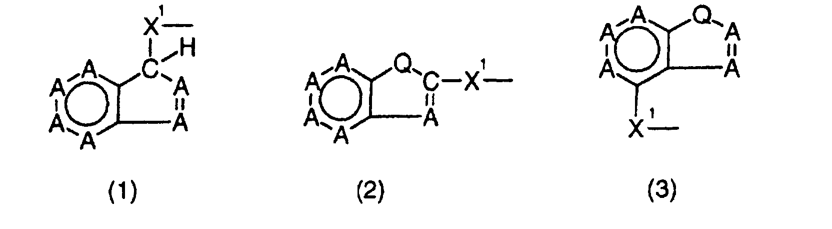 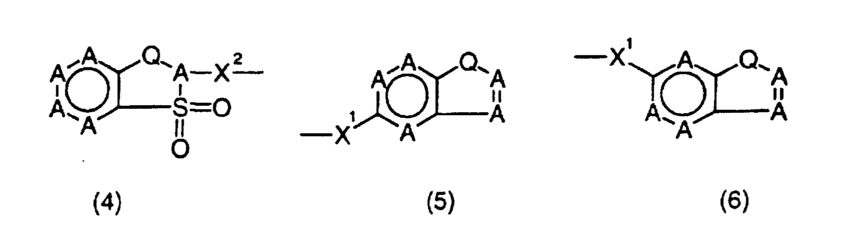 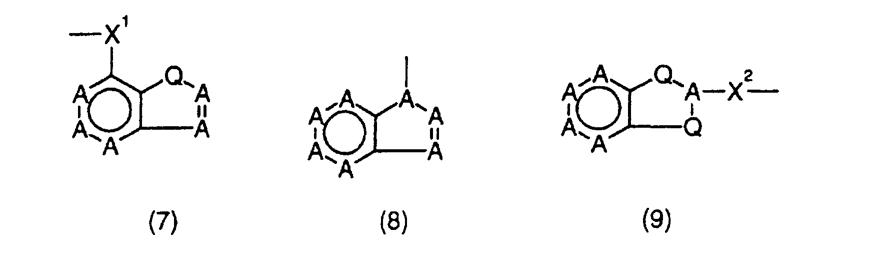 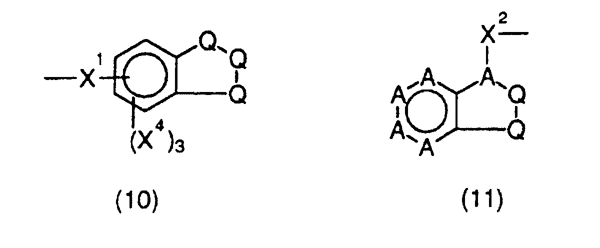
(C) 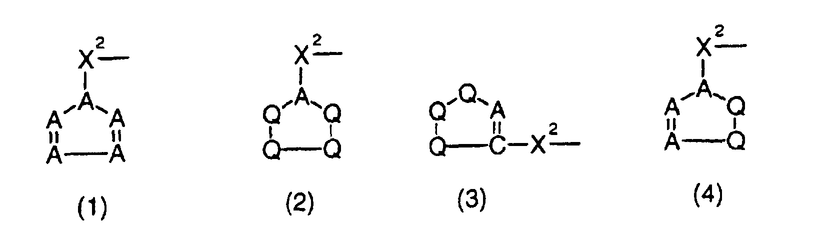 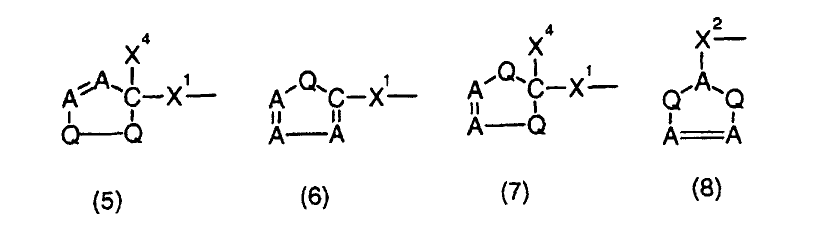 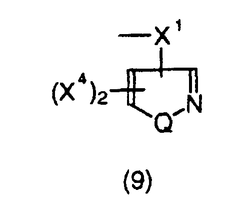
(D) 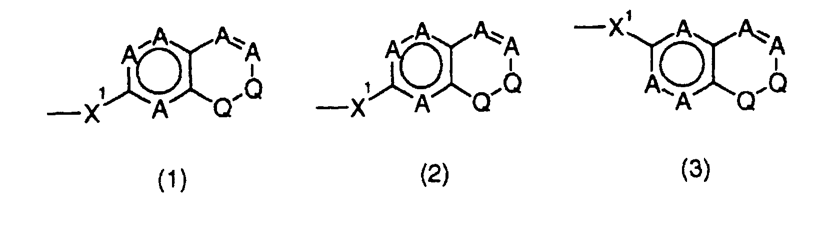 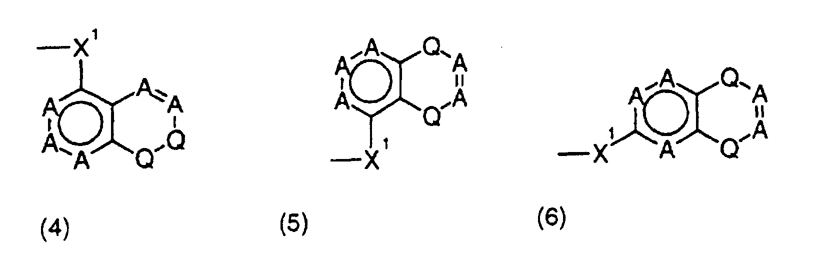 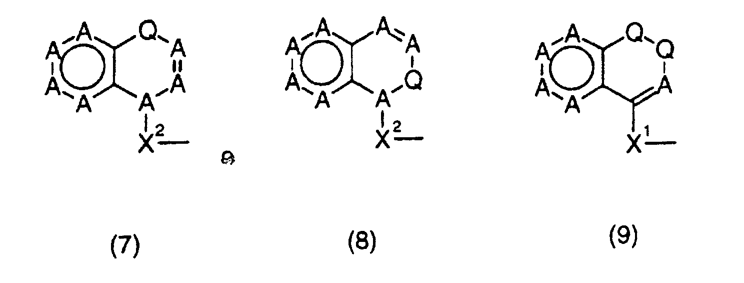 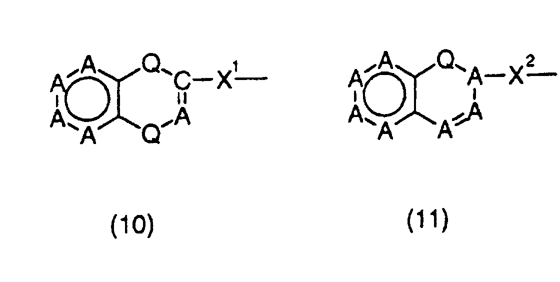
(E) 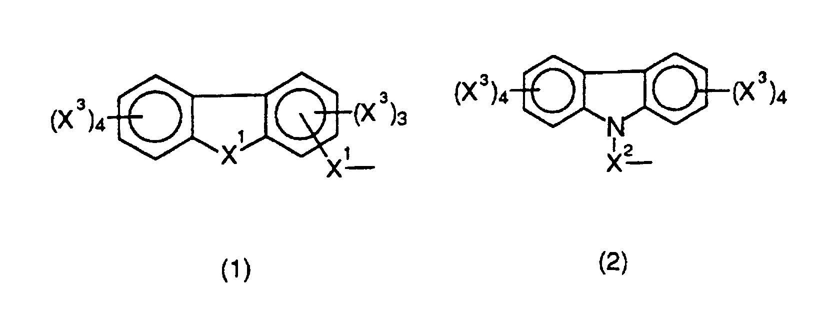
(F) 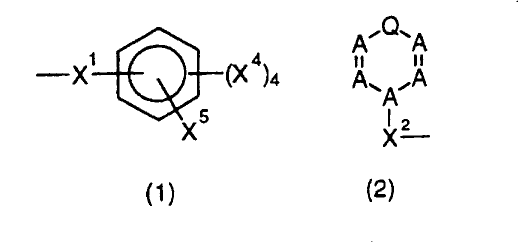 mit
A = CX⁴ oder N
Q = C(X⁴)₂, NX⁴, O, S oder CO,
wobei bei zwei unmittelbar benachbarten Q-Atomen nicht beide O oder S oder eines O und das andere S bedeuten dürfen, und wobei mindestens ein N-Atom vorhanden sein muß, außer wenn bei unmittelbar benachbarten Q-Atomen eines O oder S und das andere CO bedeutet, und in einem aromatischen 6-Ring N-Atome nicht unmittelbar benachbart sein dürfen, und wobei die Strukturen (C) und (F2) maximal 4 Heteroatome enthalten,
X = H oder F
X¹ = O oder S
X² = O, S oder eine direkte Bindung
X³ = H, F, CN, NO₂, N(CH₃)₂, N(CF₃)₂, -(CX₂)ₘ-CX₃, -O-(CX₂)ₘ-CX₃ oder -CO-(CX₂)ₘ-CX₃
mit m = 0 bis 5
X⁴ = H, F, CN, NO₂, N(CH₃)₂, N(CF₃)₂
oder ein aliphatischer und/oder cycloaliphatischer Rest mit bis zu 10 C-Atomen, wobei die H-Atome teilweise oder vollständig durch F-Atome ersetzt sein können,
oder ein Rest der Struktur -(CX₂)ₘ-C₆X₅ mit X = H oder F und m = 0 bis 5,
wobei bis zu 3 nicht-benachbarte C-Atome durch O, S, CO, COO, SO₂, NR' oder NR'-CO - mit R' = H, CH₃ oder CF₃ - ersetzt sein können,
X⁵ = F, CN, NO₂
oder ein aliphatischer Rest mit bis zu 5 C-Atomen,
wobei ≥ 50 % der H-Atome, mindestens
3 H-Atome, durch F-Atome ersetzt sein müssen und eines der C-Atome durch O, S, CO, COO, SO₂, NR' oder NR'-CO - mit R' = H, CH₃ oder CF₃ - ersetzt sein kann;
die restliche(n) der Gruppen R¹, R² und R³ ist/sind gegegebenenfalls
ein aliphatischer und/oder cycloaliphatischer Rest mit bis zu 20 C-Atomen
oder ein Rest auf Aryl- oder Heteroarylbasis mit bis zu 3 aromatischen 5- oder 6-Ringen, die entweder ein gemeinsames aromatisches System bilden oder durch direkte Bindungen und/oder über CH₂, CF₂, O, CO, COO, SO₂, NR' oder NR'-CO - mit R' = H, CH₃ oder CF₃ - miteinander verbunden sind und folgende Substituenten aufweisen können:
CN, NO₂, OCX₃, COCX₃, COOCX₃ oder OCOCX₃,
oder eine Kombination dieser beiden Reste mit bis zu 20 C-Atomen,
wobei die aliphatischen Gruppierungen teilweise ungesättigt sein können und die H-Atome teilweise oder vollständig durch F-Atome ersetzt sein können;
(2) im Falle von 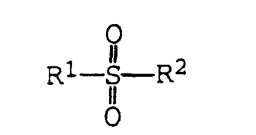 kann folgendes gelten:
R¹ = O-
und 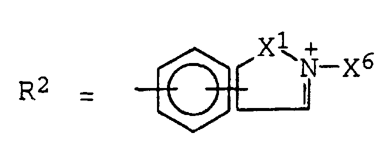
wobei X⁶ ein aliphatischer Rest mit bis zu 6 C-Atomen oder ein Cyclopentyl- oder Cyclohexylrest ist.

2. Verfahren nach Anspruch 1, **dadurch gekennzeichnet, daß** ein Aktivierungsreagenz der Struktur 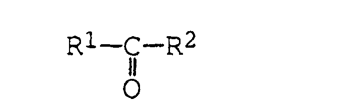 verwendet wird, wobei R¹ und/oder R² einen N-haltigen 5-Ring oder ein entsprechendes Derivat bedeuten.

3. Verfahren nach Anspruch 1 oder 2, **dadurch gekennzeichnet, daß** das Aktivierungsreagenz in stöchiometrischer oder nahezu stöchiometrischer Menge eingesetzt wird.

4. Verfahren nach einem der Ansprüche 1 bis 3, **dadurch gekennzeichnet, daß** der Lösung ein tertiäres Amin, insbesondere Pyridin oder Triethylamin, zugesetzt wird.

5. Verfahren nach einem oder mehreren der Ansprüche 1 bis 4, **dadurch gekennzeichnet, daß** die Umsetzung bei einer Temperatur zwischen 20 und 150°C durchgeführt wird.

6. Verfahren nach einem oder mehreren der Ansprüche 1 bis 5, **dadurch gekennzeichnet, daß** als Lösemittel N-Methylpyrrolidon, Dimethylacetamid oder γ-Butyrolacton verwendet wird.

## Claims

1. A process of preparing polybenzoxazole precursors and polybenzothiazole precursors, which comprise reacting a dicarboxylic acid or a dicarboxylic acid ester with a bis-o-aminophenol or bis-o-aminothiophenol in a suitable solvent in the presence of an activating reagent having the following structure: 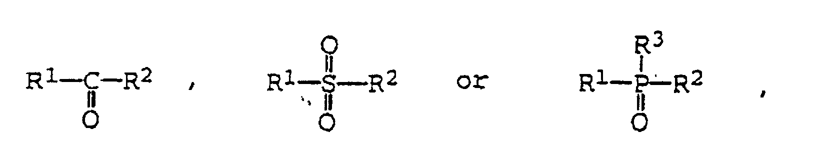 where: (1) at least one of the R¹, R² and R³ groups, which may be the same or different, has one of the following structures:
(a) an aliphatic structure of the following type:
-X¹-(CX₂)-R
where
X=H or F,
X¹=O or S,
R = an aliphatic radical and/or a cycloaliphatic radical having up to 10 carbon atoms, where ≥ 50% of the hydrogen atoms, at least three hydrogen atoms, must be replaced by fluorine atoms, or a radical having the structure -(CX₂)ₘ-C₆X₅
where m=0 to 5, where ≥ 50% of the X atoms, at least 3 X atoms, are fluorine, and where up to 3 nonvicinal carbon atoms may be replaced by O, S, CO, COO, SO₂, NR' or NR'-CO (where R'=H, CH₃ or CF₃) and up to two aliphatic bonds may be unsaturated;
(b) a cyclic structure of the following type:
(A) 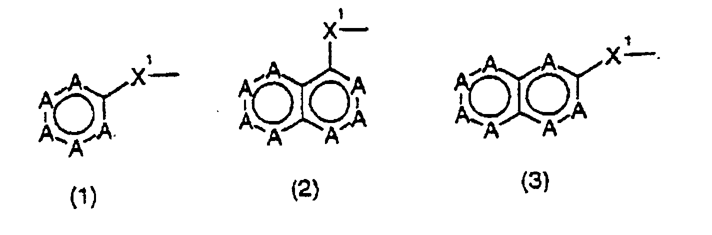
(B) 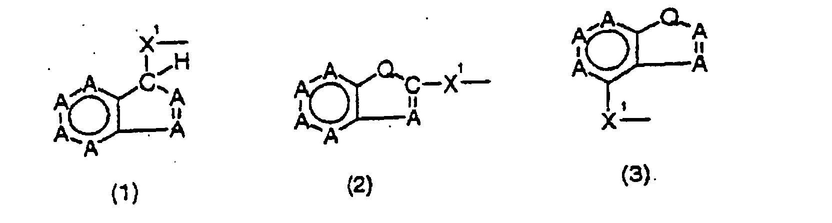 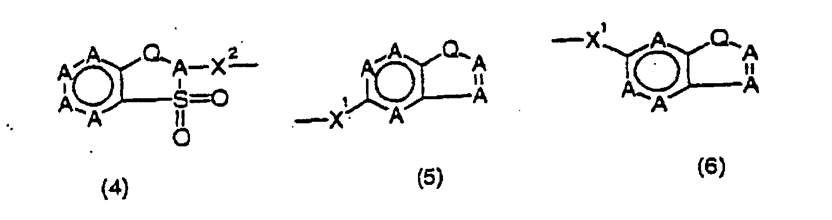 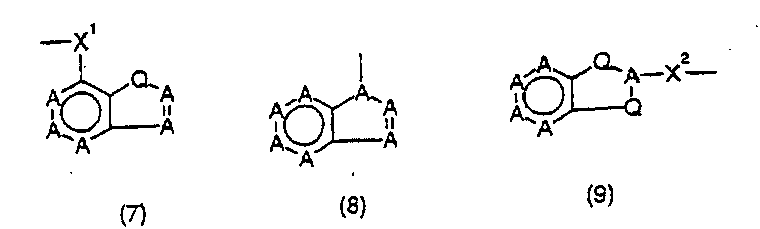 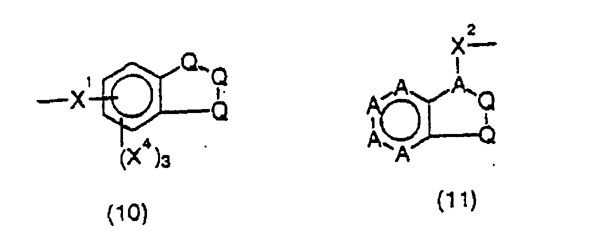
(C) 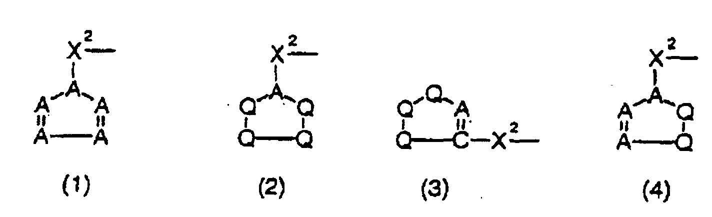 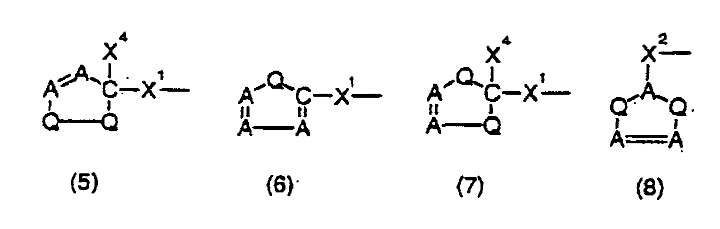 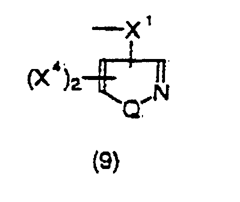
(D) 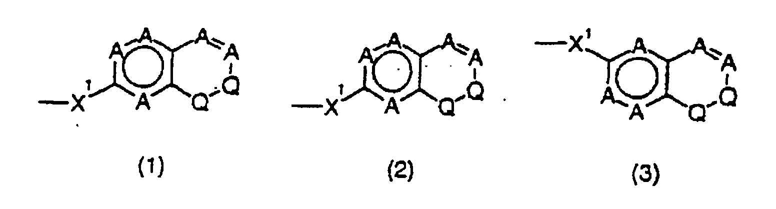 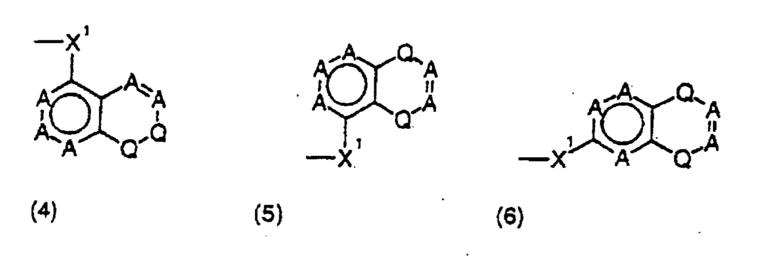 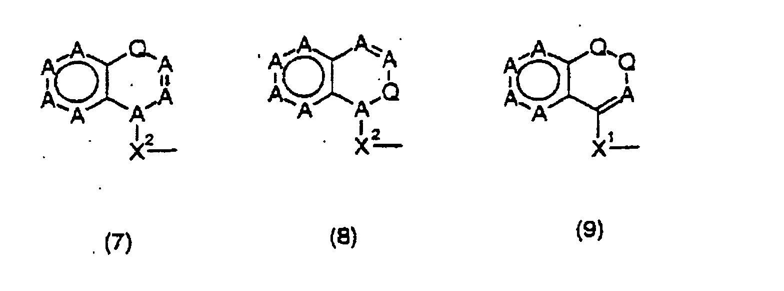 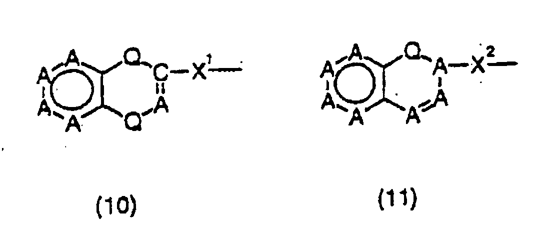
(E) 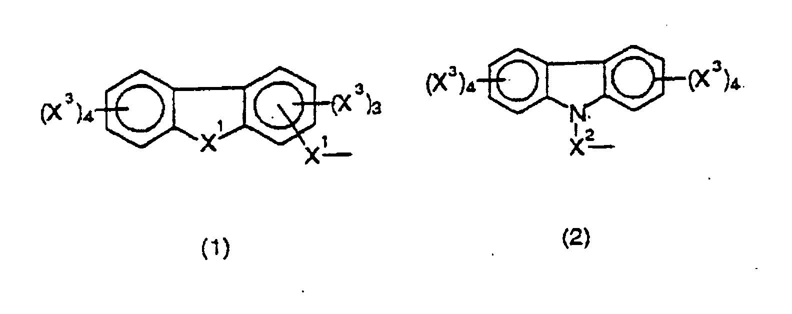
(F) 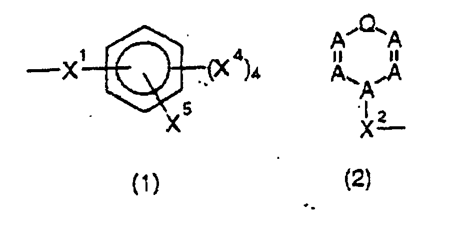 where A=CX⁴ or N
Q=C(X⁴)₂, NX⁴, O, S or CO,
where, when there are two. directly vicinal Q atoms, both may not denote O or S, or one may denote O and the other S, and where at least one nitrogen atom must be present, except when in the case of directly vicinal Q atoms one denotes O or S and the other denotes CO, and nitrogen atoms must not be directly vicinal in an aromatic 6-membered ring, and where the structures (C) and (F2) contain a maximum of 4 heteroatoms,
X=H or F
X¹ =O or S
X² =O, S or a direct bond
X³ =H, F, CN, NO₂, N(CH₃)₂, N(CF₃)₂, -(CX₂)ₘ-CX₃, -O-(CX₂)ₘ-CX₃ or -CO-(CX₂)ₘ-CX₃
where m=0 to 5,
X⁴=H, F, CN, NO₂, N(CH₃)₂, N(CF₃)₂ or an aliphatic and/or cycloaliphatic radical with up to 10 carbon atoms, where some or all of the hydrogen atoms may be replaced by fluorine atoms, or a radical having the structure -(CX₂)ₘ-C₆X₅,
where X=H or F and m=0 to 5,
where up to 3 nonvicinal carbon atoms may be replaced by O, S, CO, COO, SO₂, NR' or NR'-CO
where R'=H, CH₃ or CF₃,
X₅ =F, CN, NO₂ or an aliphatic radical with up to 5 carbon atoms where ≥ 50% of the hydrogen atoms, at least 3 hydrogen atoms, must be replaced by fluorine atoms, and one of the carbon atoms may be replaced by O, S, CO, COO, SO₂, NR' or NR' -CO, where R' =H, CH₃ or CF₃ ;
the remaining R¹, R² and R³ group(s) is/are optionally an aliphatic and/or cycloaliphatic radical with up to 20 carbon atoms,
or a radical on an aryl or heteroaryl basis with up to 3 aromatic 5- or 6-membered rings which either form a common aromatic system or are linked to each other by direct bonds and/or via CH₂, CF₂, O, CO, COO, SO₂, NR' or NR'-CO, where R'=H, CH₃ or CF₃, and they may have the following substituents:
CN, NO₂, OCX₃, COCX₃, COOCX₃ or OCOCX₃,
or a combination of these 2 radicals with up to 20 carbon atoms,
where the aliphatic groups may be partially unsaturated, and some or all of the hydrogen atoms may be replaced by fluorine atoms;
(2) in the case of 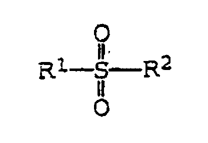 the following may hold: R¹ =O⁻ and R² = 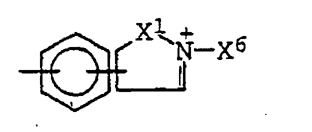 where X⁶ is an aliphatic radical with up to 6 carbon atoms or a cyclopentyl or cyclohexyl radical.

2. The process according to claim 1, wherein an activating reagent having the structure 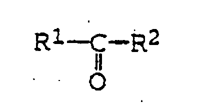 is used, where R¹ and/or R² denote a 5-membered ring containing nitrogen or a corresponding derivative.

3. The process according to claim 1 or 2, wherein the activating reagent is used in a stoichiometric or almost stoichiometric amount.

4. The process according to any of claims 1 to 3, wherein a tertiary amine, in particular pyridine or triethylamine, is added to the solution.

5. The process according to one or more of claims 1 to 4, wherein the reaction is performed at a temperature between 20°C and 150°C.

6. The process according to one or more of claims 1 to 5, wherein N-methylpyrrolidone, dimethylacetamide or γ-butyrolactone is used as the solvent.

## Revendications

1. Procédé de préparation de précurseurs de polybenzoxazoles et de polybenzothiazoles, **caractérisé en ce que** l'on met un acide dicarboxylique ou un ester d'acide dicarboxylique à réagir sur un bis-o-aminophénol ou sur un bis-o-aminothiophénol dans un solvant approprié en présence d'un réactif d'activation ayant la structure suivante 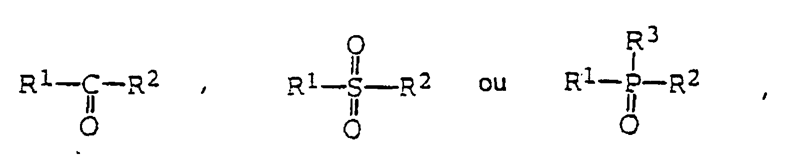 dans laquelle on a :
(1) au moins l'un des groupes R₁, R₂, et R₃, qui peuvent être identiques ou différents, a l'une des structures suivantes :
a) une structure aliphatique de type suivant :
-X¹-(CX₂)-R
avec X = H ou F
X¹ = O ou S
R = un radical aliphatique et/ou cycloaliphatique ayant jusqu'à 10 atomes de carbone, 50 % ou plus de 50 % des atomes de H, au moins 3 atomes de H, devant être remplacés par des atomes de F,
ou un radical de structure -(CX₂)ₘ-C₆X₅ avec m = 0 à 5, 50 % ou plus de 50 % des atomes de X , au moins 3 atomes de X, étant du fluor.
et dans lequel jusqu'à 3 atomes de carbone qui ne sont pas voisins peuvent être remplacés par O, S, CO, COO, SO₂, NR' ou NR' - CO - avec R' = H, CH₃ ou CF₃ et jusqu'à 2 liaisons aliphatiques peuvent être insaturées ;
b) une structure cyclique de type suivant :
(A) 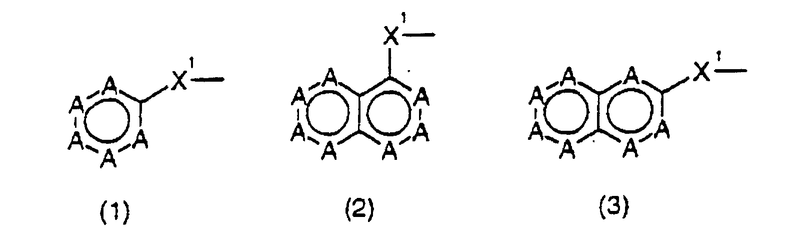
(B) 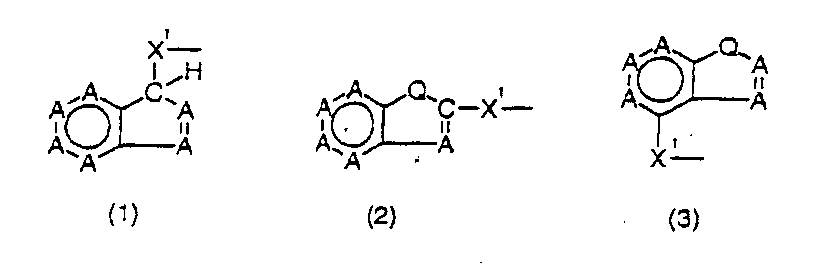 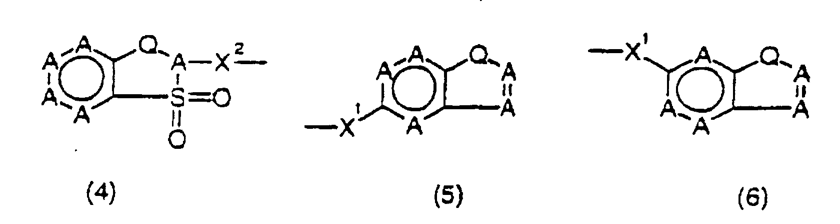 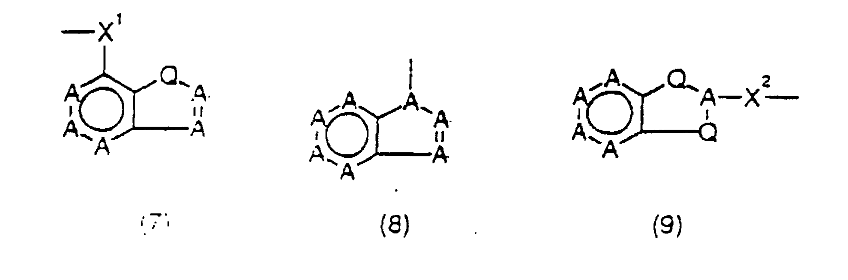 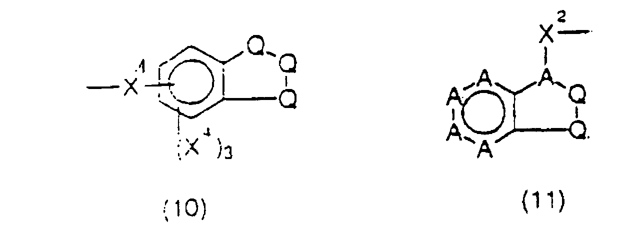
(C) 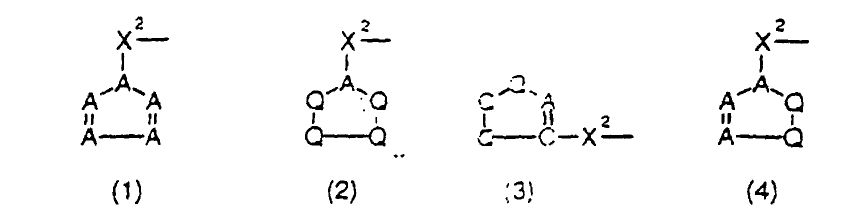 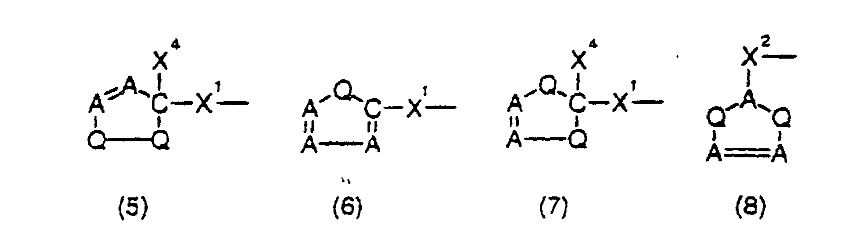 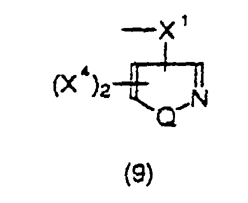
(D) 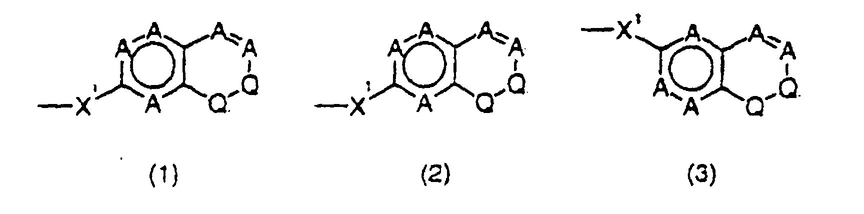 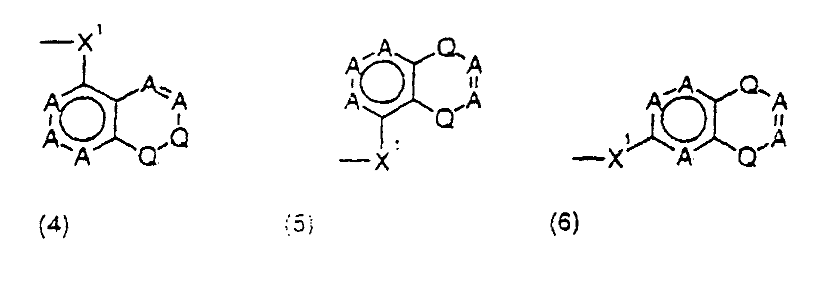 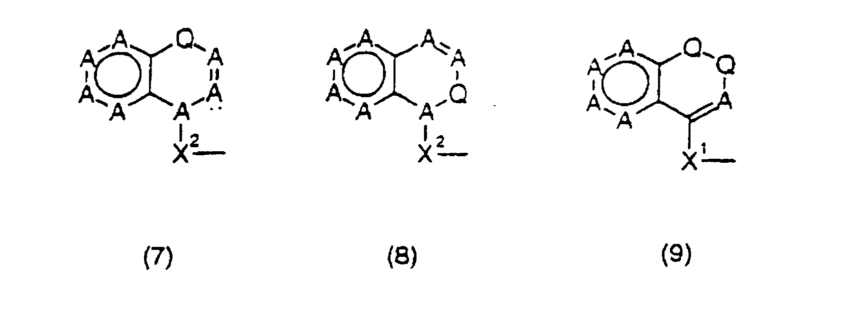 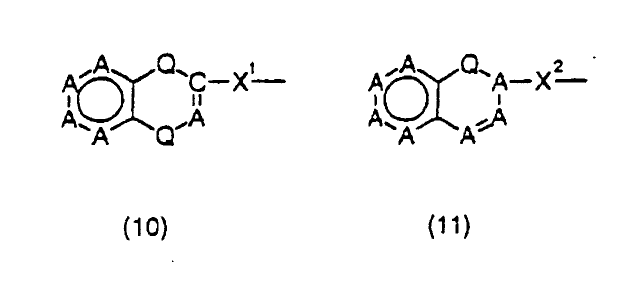
(E) 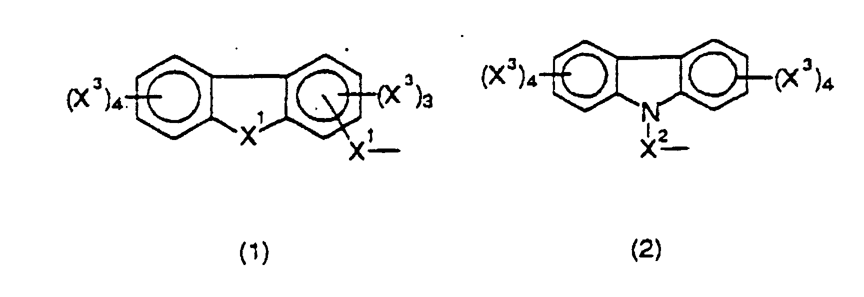
(F) 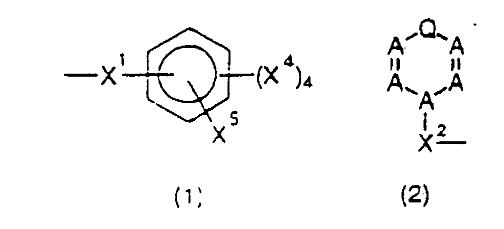
avec A = CX⁴ ou N
Q = C (X⁴) ₂, NX⁴, O, S ou CO,
dans laquelle, s'il y a deux atomes de Q immédiatement voisins, ils ne doivent pas tous deux représenter O ou S ou l'un O et l'autre S et dans laquelle au moins un atome N doit être présent sauf lorsque, s'il y a des atomes de Q immédiatement voisins, l'un représente O ou S et l'autre CO, et dans un cycle aromatique à 6 chaînons des atomes de N ne doivent pas être immédiatement voisins et dans laquelle les structures (C) et (F2) comportent au maximum 4 hétéroatomes
X = H ou F
X₁ = O ou S
X₂ = O, S ou une liaison directe
X₃ = H, F, CN, NO₂, N(CH₃)₂, N (CF₃)₂ - (CX₂)ₘ - CX₃, -O- (CX₂)ₘ-CX₃ ou -CO- (CX₂)ₘ -CX₃
avec m = 0 à 5
X₄ = H, F, CN, NO₂, N (CH₃)₂, N (CF₃)₂
ou un radical aliphatique et/ou cycloaliphatique ayant jusqu'à 10 atomes de carbone, les atomes de H pouvant être remplacés en tout ou partie par des atomes de F
ou un radical de structure -(CX₂)ₘ₋C₆X₅ avec X = H ou F et m = 0 à 5,
dans laquelle jusqu'à 3 atomes de carbone qui ne sont pas voisins peuvent être remplacés par O, S, CO, COO, SO₂, NR' ou NR' -CO- avec R' = H, CH₃ ou CF₃
X⁵ = F, CN, NO₂
ou un radical aliphatique ayant jusqu'à 5 atomes de carbone,
50 % ou plus de 50 % des atomes de H et au moins 3 atomes de H devant être remplacés par des atomes de F et l'un des atomes de C pouvant être remplacé par O, S, CO, COO, SO₂, NR' ou NR' -CO- avec R' = H, CH₃ ou CF₃
le reste ou les restes des groupes R¹, R² et R³ est/sont éventuellement un radical aliphatique et/ou cycloaliphatique ayant jusqu'à 20 atomes de C
ou un radical à base d'aryle ou d'hétéroaryle ayant jusqu'à 3 cycles aromatiques à 5 ou 6 chaînons qui forment, soit un système aromatique commun, ou qui sont reliés entre eux par des liaisons directes et/ou par CH₂, CF₂, O, CO, COO, SO₂, NR' ou NR' -CO - avec R' = H, CH₃ ou CF₃ et qui peuvent avoir les substituants suivants :
CN, NO₂, OCX₃, COCX₃, COOCX₃, ou OCOCX₃,
ou une combinaison de ces deux radicaux ayant jusqu'à 20 atomes de carbone,
les groupements aliphatiques pouvant être partiellement insaturés et les atomes de H pouvant être remplacés en tout ou partie par des atomes de F
(2) dans le cas de 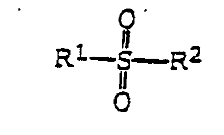 on peut avoir ce qui suit :
R¹ = O-
et 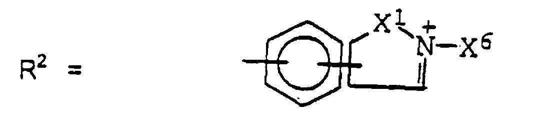 X⁶ étant un radical aliphatique ayant jusqu'à 6 atomes de carbone ou un radical cyclopentyie ou un radical cyclohexyle,

2. Procédé suivant la revendication 1, **caractérisé en ce que** l'on utilise un réactif d'activation de structure, dans laquelle 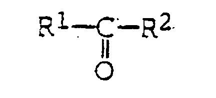 est un cycle azoté à 5 chaînons ou un dérivé correspondant,

3. Procédé selon les revendications 1 ou 2, **caractérisé en ce que** l'on engage le réactif d'activation en une quantité stoechiométrique ou presque stoechiométrique,

4. Procédé selon l'une des revendications 1 à 3, **caractérisé en ce que** l'on ajoute à la solution une amine tertiaire, notamment de la pyridine ou de la triéthylamine,

5. Procédé selon une ou plusieurs des revendications 1 à 4, **caractérisé en ce que** l'on effectue la réaction à une température comprise entre 20 et 150° C,

6. Procédé suivant l'une ou plusieurs des revendications 1 à 5, **caractérisé en ce que** l'on utilise comme solvant de la N-méthylpyrrolidone, du diméthylacétamide ou de la γ - butyrolactone.
